# EUROPEAN PATENT APPLICATION

(11) **EP 4 821 359 A1**
(43) Date of publication of application: **14.10.2026**
(21) Application number: 26169439.2
(22) Date of filing: 31.03.2026
(51) Int. Cl.: A01M 29/24, A01D 75/18, A01D 34/00, A01D 34/81

(54) **SELF-PROPELLED OPERATING APPARATUS**

(30) Priority: 11.04.2025 CN 202510451193
(71) Applicant: Shenzhen Mammotion Innovation Co., Limited, Shenzhen, Guangdong 518000 (CN)
(72) Inventor:
(74) Representative: Huang, Liwei

(57) **Abstract**

The present application provides a self-propelled operating apparatus, which comprises a device body, a traveling device, and a working device. At least a portion of a to-be-protected component is disposed on a surface of the device body. The self-propelled operating apparatus moves via the traveling device disposed at a bottom of the device body. The working device is disposed on the device body and is configured to perform a predetermined task, such as mowing, snow sweeping, or cleaning. The self-propelled operating apparatus further comprises a repelling device, which surrounds at least part of a peripheral side of the to-be-protected component and is configured to repel a to-be-repelled subject. The repelling device forms a protective region around the peripheral side of the to-be-protected component, thereby repelling a to-be-repelled subject that is about to enter the protective region, such that the to-be-repelled subject stops moving or changes its moving direction upon contacting the repelling device. In this way, the to-be-repelled subject is prevented from entering the protective region, thereby avoiding obstruction of the to-be-protected component or interference from substances, such as mucus, secreted by the to-be-repelled subject.

## Description

### TECHNICAL FIELD

This disclosure relates to the field of robot technology, and in particular to a self-propelled operating apparatus.

### BACKGROUND

With widespread use of self-propelled lawn mowers, self-propelled snow sweepers, self-propelled cleaning robots, and other self-propelled operating apparatus, self-propelled operating apparatus are vulnerable to invasion by small organisms such as snails and slugs. Small organisms such as snails and slugs climb onto a body surface and readily block sensing of a sensing module, thereby reducing sensitivity of the sensing module or falsely triggering an obstacle avoidance function. Mucus secreted by small organisms such as snails and slugs can corrode the charging electrode plates, thereby causing corrosion of the charging electrode plates. Existing self-propelled operating apparatus have not yet been provided with an effective solution for preventing snail climbing, which creates a risk that the sensing module may be blocked and that the charging electrode plates may be corroded, thereby affecting positioning and obstacle avoidance functions of the self-propelled operating apparatus and causing damage to the charging electrode plates, which may lead to reduced working efficiency and accuracy. Based on this, how to improve a repelling function of a self-propelled operating apparatus has become a technical problem to be solved.

### SUMMARY

A main object of this disclosure is to provide a self-propelled operating apparatus, so as to solve the technical problem of improving a repelling function of the self-propelled operating apparatus.

To achieve the above object, an embodiment of this disclosure provides a self-propelled operating apparatus, comprising:
a device body, wherein a surface of the device body is provided with at least one to-be-protected component;
a travel device disposed at a bottom portion of the device body and configured to propel the self-propelled operating apparatus;
an operating device disposed on the device body and configured to perform a predetermined task; and
a repelling device disposed to surround at least a portion of a periphery of the at least one to-be-protected component to form a protective region, wherein the repelling device configured such that a to-be-repelled subject stops moving or changes direction upon contacting the repelling device.

The self-propelled operating apparatus provided in this disclosure comprises a device body, a travel device, and an operating device. At least a part of a to-be-protected component is disposed on a surface of the device body. The self-propelled operating apparatus moves by the travel device disposed at the bottom of the device body. The operating device is disposed on the device body and is configured to perform a preset task, such as mowing, snow sweeping, or cleaning. The self-propelled operating apparatus further comprises a repelling device, and the repelling device surrounds at least part of a peripheral side of the to-be-protected component. The repelling device is configured to repel a to-be-repelled subject, so as to form a protective region at the peripheral side of the to-be-protected component and repel the to-be-repelled subject that is about to enter the protective region, such that the to-be-repelled subject stops moving or changes a moving direction in response to contacting the repelling device, thereby preventing the to-be-repelled subject from entering the protective region and further preventing the to-be-protected component from being blocked by the to-be-repelled subject or affected by mucus secreted by the to-be-repelled subject, so that the self-propelled operating apparatus has a favorable repelling function and self-protection function, and reliability of the self-propelled operating apparatus is improved.

In an optional embodiment, the repelling device surrounds at least a portion of a top and/or a side of the device body.

In an optional embodiment, the at least one to-be-protected component comprises a sensor module, and the repelling device surrounds at least a portion of a periphery of the sensor module.

In an optional embodiment, the sensor module is disposed at a top and/or a rear portion of the device body.

In an optional embodiment, the at least one to-be-protected component comprises a charging device, and the repelling device surrounds at least a portion of a periphery of the charging device.

In an optional embodiment, the charging device is disposed at a rear, a front, or a side portion of the device body.

In an optional embodiment, the repelling device is configured to generate a repelling current to repel to-be-repelled subject.

In an optional embodiment, the repelling device comprises a first electrode and a second electrode, such that when a to-be-repelled subject simultaneously contacts the first electrode and the second electrode, a conductive path is formed between the first electrode and the second electrode to generate a current for repelling the to-be-repelled subject.

In an optional embodiment, the first electrodes are electrically connected to a positive terminal of a power source and the second electrodes are electrically connected to a negative terminal of the power source.

In an optional embodiment, there are multiple first electrodes and multiple second electrodes, and the multiple first electrodes and the multiple second electrodes are alternately arranged and spaced apart from each other.

In an optional embodiment, the first electrodes are electrically connected to one positive terminal and the second electrodes are electrically connected to the other positive terminal of a power source, so that a potential difference is established between the two terminals.

In an optional embodiment, the repelling device further comprises multiple third electrodes disposed between the first electrodes and the second electrodes, the first electrode positioned away from the to-be-protected component, and the second electrode positioned close to the to-be-protected component.

In an optional embodiment, in the direction from the first electrodes to the second electrodes, the potential differences between each pair of adjacent third electrodes sequentially increase.

In an optional embodiment, the first electrodes and the second electrodes are each an annular electrode, or the first electrodes and the second electrodes are each a planar spiral electrode.

In an optional embodiment, there are multiple first electrodes and multiple second electrodes, the multiple first electrodes and the multiple second electrodes being interlaced in both longitudinal and transverse directions, the multiple first electrodes being sequentially spaced, and the multiple second electrodes being sequentially spaced.

In an optional embodiment, the plurality of first electrodes comprise alternating first positive electrodes and first negative electrodes, the plurality of second electrodes comprise alternating second positive electrodes and second negative electrodes, the first positive electrodes being electrically isolated from the second negative electrodes at intersections thereof, and the first negative electrodes being electrically isolated from the second positive electrodes at intersections thereof.

In an optional embodiment, the first positive electrodes and the second positive electrodes are electrically connected at intersections thereof, and the first negative electrodes and the second negative electrodes are electrically connected at intersections thereof.

In an optional embodiment, the plurality of first electrodes comprises a plurality of third positive electrodes, the plurality of second electrodes comprises a plurality of fourth positive electrodes, and the third positive electrodes are electrically isolated from the fourth positive electrodes at intersections thereof.

In an optional embodiment, the second electrodes protrude beyond the first electrodes.

In an optional embodiment, the second electrode comprises a plurality of spaced conductive portions, each of which is electrically connected to the second electrode and protrudes beyond the first electrode(s).

In an optional embodiment, the repelling device comprises a conductive layer including opposite ends electrically connected to a positive terminal and a negative terminal of a power source, respectively, and configured to apply electrical stimulation to the to-be-repelled subject when the to-be-repelled subject contacts the conductive layer.

In an optional embodiment, the repelling device comprises a galvanic cell electrode, such that when the to-be-repelled subject contacts the galvanic cell electrode, a current is generated by a galvanic effect to apply electrical stimulation to the to-be-repelled subject.

In an optional embodiment, the galvanic cell electrode comprises a copper layer.

In an optional embodiment, the repelling device further comprises a first power source, a positive terminal of the first power source being electrically connected to the first electrode, and a negative terminal of the first power source being electrically connected to the second electrode, such that the first electrode and the second electrode form a conductive path through the to-be-repelled subject to generate the repelling current; or
the self-propelled operating apparatus further comprises a second power source, a positive terminal of the second power source being electrically connected to the first electrode, and a negative terminal of the second power source being electrically connected to the second electrode, such that the first electrode and the second electrode form a conductive path through the to-be-repelled subject to generate the repelling current.

In an optional embodiment, the repelling device comprises a spike structure, the spike structure protruding from the surface of the device body and surrounding the to-be-protected component.

In an optional embodiment, the repelling device is detachably connected to the device body.

In an optional embodiment, the device body defines a receiving recess, the repelling device comprises a mounting portion, and the mounting portion is received in the receiving recess and at least partially protrudes from the surface of the device body.

In an optional embodiment, the self-propelled operating apparatus further comprises a controller, the to-be-protected component comprises a humidity sensor, and the humidity sensor is electrically connected to the controller;
the controller is configured at least to, in response to the humidity sensor detecting humidity greater than or equal to a humidity threshold, control the repelling device to be electrically connected to a power source; or the controller is configured to control the repelling device to be electrically connected to the power source in response to the self-propelled operating apparatus being in a charging state or an operating state.

### BRIEF DESCRIPTION OF THE DRAWINGS

To more clearly illustrate the technical solutions in embodiments of this disclosure, the drawings to be used in the embodiments are briefly introduced below.
FIG.1 is a schematic side view of a self-propelled operating apparatus according to an embodiment of this disclosure;
FIG.2 is a perspective view from a rear-end angle of a self-propelled operating apparatus according to an embodiment of this disclosure;
FIG.3 is a perspective view from a front-end angle of a self-propelled operating apparatus according to an embodiment of this disclosure;
FIG.4 is a schematic view of a position where a repelling device of a self-propelled operating apparatus according to an embodiment of this disclosure is disposed on a side portion of a device body near a bottom;
FIG.5 is a schematic view of a position where a repelling device of a self-propelled operating apparatus according to an embodiment of this disclosure is disposed on a side portion of a device body higher than a front traveling wheel and a rear traveling wheel;
FIG.6 is a first schematic view of a position where a repelling device of a self-propelled operating apparatus according to an embodiment of this disclosure is disposed on a side portion of a device body near a top;
FIG.7 is a second schematic view of a position where a repelling device of a self-propelled operating apparatus according to an embodiment of this disclosure is disposed on a side portion of a device body near a top;
FIG.8 is a schematic structural view of a first repelling device according to an embodiment of this disclosure;
FIG.9 is a schematic structural view of a second repelling device according to an embodiment of this disclosure;
FIG.10 is a schematic structural view of a third repelling device according to an embodiment of this disclosure;
FIG.11 is a schematic structural view of a fourth repelling device according to an embodiment of this disclosure;
FIG.12 is a schematic structural view of a fifth repelling device according to an embodiment of this disclosure;
FIG.13 is a schematic structural view of a sixth repelling device according to an embodiment of this disclosure;
FIG.14 is a schematic structural view of a seventh repelling device according to an embodiment of this disclosure;
FIG.15 is a schematic structural view of an eighth repelling device according to an embodiment of this disclosure;
FIG.16 is a schematic structural view of a ninth repelling device according to an embodiment of this disclosure;
FIG.17 is a schematic structural view of a tenth repelling device according to an embodiment of this disclosure;
FIG.18 is a schematic structural view of an eleventh repelling device according to an embodiment of this disclosure;
FIG.19 is a schematic structural view of a twelfth repelling device according to an embodiment of this disclosure;
FIG.20 is a schematic structural view of a thirteenth repelling device according to an embodiment of this disclosure;
FIG.21 is a schematic structural view of a mounting manner of a repelling device according to an embodiment of this disclosure.

### DETAILED DESCRIPTION

The technical solutions of this disclosure are described clearly and completely below with reference to the drawings. Apparently, the described embodiments are only some embodiments of this disclosure rather than all embodiments. Based on the embodiments provided in this disclosure, all other embodiments obtained by a person of ordinary skill in the art without creative effort fall within the protection scope of this disclosure.

Reference to "an embodiment" in this disclosure means that a particular feature, structure, or characteristic described in connection with the embodiment may be included in at least one embodiment of this disclosure. Occurrences of this phrase in various places in the specification do not necessarily refer to the same embodiment, nor are they mutually exclusive, independent, or alternative embodiments. A person skilled in the art may explicitly and implicitly understand that the embodiments described in this disclosure may be combined with other embodiments.

In the specification, claims, and accompanying drawings of this disclosure, terms such as "first" and "second" are used to distinguish different subjects rather than to describe a specific order. In addition, the terms "comprise" and "have", and any variations thereof, are intended to cover non-exclusive inclusion. For example, a component or device comprising one or more parts is not limited to the one or more listed parts, and may optionally further comprise one or more unlisted parts inherent to the exemplary product, or one or more parts that should be present based on the described functions.

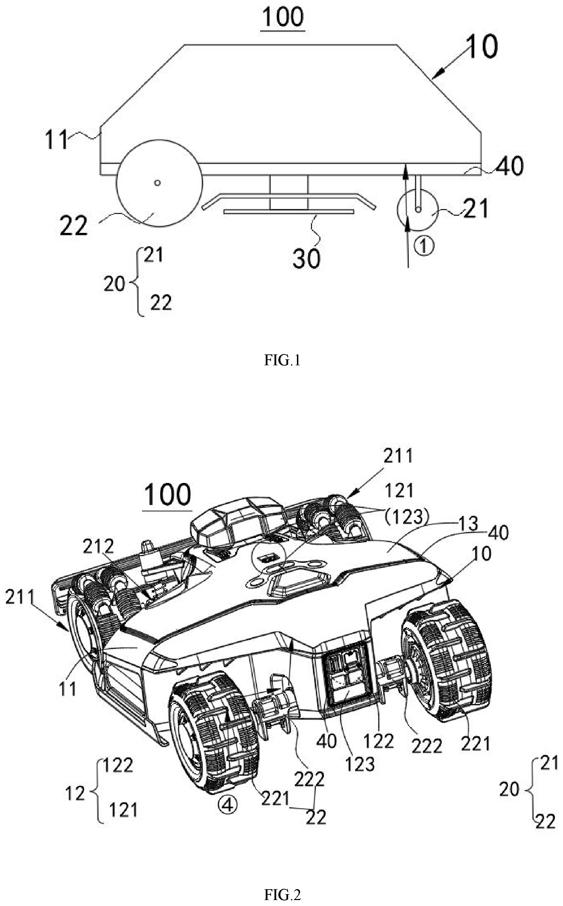

Referring to FIG.1, this disclosure provides an outdoor self-propelled operating apparatus 100 that operates in household yards, estates, hotels, and the like, and the self-propelled operating apparatus 100 comprises, but is not limited to, a mower, a snow sweeper, a cleaning robot, and the like.

At present, self-propelled operating apparatus 100 generally lack a protective design against small organisms such as snails and slugs. Such organisms readily climb onto a body surface during operation of the device and block signals of the self-propelled operating apparatus 100. Mucus secreted by such small organisms may also corrode metal structures of the self-propelled operating apparatus 100.

In the embodiments of this disclosure, a mower is taken as an example. A body housing of the mower is provided with sensing modules such as a vision sensor and a lidar. In response to a snail climbing onto the body housing of the mower and blocking key sensing modules such as the vision sensor or the lidar, positioning accuracy of the device decreases and environmental perception capability weakens, and in severe cases an obstacle avoidance function may fail, thereby affecting normal working performance, safety, and reliability of the mower. In response to a snail climbing to charging electrode plates, mucus produced by the snail corrodes the charging electrode plates, thereby hindering charging of the mower.

Existing mowers have not yet been provided with an effective solution for preventing snail climbing, which makes a vision module or a lidar readily blocked and charging electrode plates readily corroded, thereby affecting positioning and obstacle avoidance functions of the mower and causing damage to the charging electrode plates, which may lead to reduced working efficiency and accuracy.

Referring to FIG.1 and FIG.2, based on the above problems, this disclosure provides a self-propelled operating apparatus 100. The self-propelled operating apparatus 100 comprises a device body 10, a travel device 20, an operating device 30, and at least one repelling device 40.

Referring to FIG.1 and FIG.2, the device body 10 comprises a body housing 11.

Referring to FIG.1 and FIG.2, a surface of the device body 10 is provided with at least one to-be-protected component 12. In a further optional arrangement, a surface of the body housing 11 is provided with at least one to-be-protected component 12. The to-be-protected component 12 comprises, but is not limited to, parts readily affected by invasion of small organisms such as snails and slugs, for example, a sensing module 121 or a charging device 122.

Referring to FIG.1, FIG.2, and FIG.3, the travel device 20 is disposed at a bottom of the device body 10 and is configured to drive the self-propelled operating apparatus 100 to move. Optionally, the travel device 20 comprises a front traveling wheel device 21 and a rear traveling wheel device 22. The front traveling wheel device 21 comprises, but is not limited to, a caster wheel disposed at the bottom of the device body 10 near a front end; or two front traveling wheels 211 disposed on two sides of the device body 10 near the front end, the two front traveling wheels being connected to the body housing 11 through a first connecting structure 212. The rear traveling wheel device 22 comprises, but is not limited to, two rear traveling wheels 221 disposed on two sides of the device body 10 near a rear end, the two rear traveling wheels 221 being connected to the body housing 11 through a second connecting structure 222.

The operating device 30 is disposed on the device body 10 and is configured to perform a preset task. Optionally, in response to the self-propelled operating apparatus 100 being a mower, the operating device 30 is a cutting device. In another optional arrangement, in response to the self-propelled operating apparatus 100 being a snow sweeper, the operating device 30 is a snow sweeping device. In another optional arrangement, in response to the self-propelled operating apparatus 100 being a cleaning robot, the operating device 30 is a cleaning roller brush device.

The repelling device 40 surrounds at least part of a peripheral side of the to-be-protected component 12, so as to form a protective region 13 at the peripheral side of the to-be-protected component 12, such that the to-be-repelled subject stops moving or changes a moving direction in response to contacting the repelling device 40.

At least part of the peripheral side of the to-be-protected component 12 comprises at least one of a front side, a left side, a rear side, and a right side of the to-be-protected component 12.

The repelling device 40 is disposed at least partially around the peripheral side of component 12, so as to form the protective region 13 at the peripheral side of the to-be-protected component 12, such that the to-be-repelled subject stops moving or changes a moving direction in response to contacting the repelling device 40.

For example, the repelling device 40 is disposed on at least one of the front side, the left side, the rear side, and the right side of the to-be-protected component 12. Specifically, the repelling device 40 may be annular; or the repelling device 40 may include an open shape such as a linear shape, an arc shape, a semi-annular shape, a bent-line shape, a dot-matrix shape, or a line-array shape.

For example, the repelling device 40 may be annular, and the annular repelling device 40 surrounds the peripheral side of the to-be-protected component 12.

Optionally, the repelling device 40 has an open shape such as a linear shape, an arc shape, a semi-annular shape, a bent-line shape, a dot-matrix shape, or a line-array shape.

For example, one repelling device 40 has a semi-annular shape, and the semi-annular repelling device 40 is disposed on the peripheral side of the to-be-protected component 12, for example, on a path along which snails frequently crawl near the to-be-protected component 12.

As another example, two repelling device 40 include semi-annular shapes, and the two semi-annular repelling device 40 are combined to form an annular shape disposed around the peripheral side of the to-be-protected component 12.

As another example, a plurality of repelling devices 40 has arc shapes, and the plurality of arc-shaped repelling device 40 are combined to form an annular shape disposed around the peripheral side of the to-be-protected component 12.

For ease of description, the following embodiments are described by taking an example in which the repelling device 40 is annular and is disposed around the to-be-protected component 12 on four sides. Of course, embodiments in which the repelling device 40 has another open structure may refer to this embodiment.

Here, the to-be-repelled subject comprises, but is not limited to, a small crawling organism such as a snail or a slug, so as to avoid these organisms affecting operation of the sensing module 121 of the mower or corroding metal components on the mower.

Here, the sensing module 121 comprises, but is not limited to, at least one of a vision sensor, an ultrasonic sensor, a lidar, a rain detector, and a humidity sensor.

In this disclosure, the repelling device 40 is not particularly limited. The repelling device may use electric-shock repelling, or may use physical repelling, for example, a barbed mesh including a spike structure.

The number of components to be protected 12 may be one or more.

In response to the number of components to be protected 12 being one, the number of repelling device 40 is one, and the repelling device 40 is disposed on the peripheral side of the to-be-protected component 12, so as to form the protective region 13 at the peripheral side of the to-be-protected component 12 and repel the to-be-repelled subject that is about to enter the protective region 13, for example, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject.

In response to the number of components to be protected 12 being one, the number of repelling devices 40 is a plurality. The plurality of repelling device 40 may be arranged in an annular shape on the peripheral side of the to-be-protected component 12; or each repelling device 40 may be disposed on the peripheral side of the to-be-protected component 12, and the plurality of repelling device 40 may be distributed inside and outside the peripheral side of the to-be-protected component 12, so as to form the protective region 13 at the peripheral side of the to-be-protected component 12 and repel the to-be-repelled subject that is about to enter the protective region 13, for example, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject.

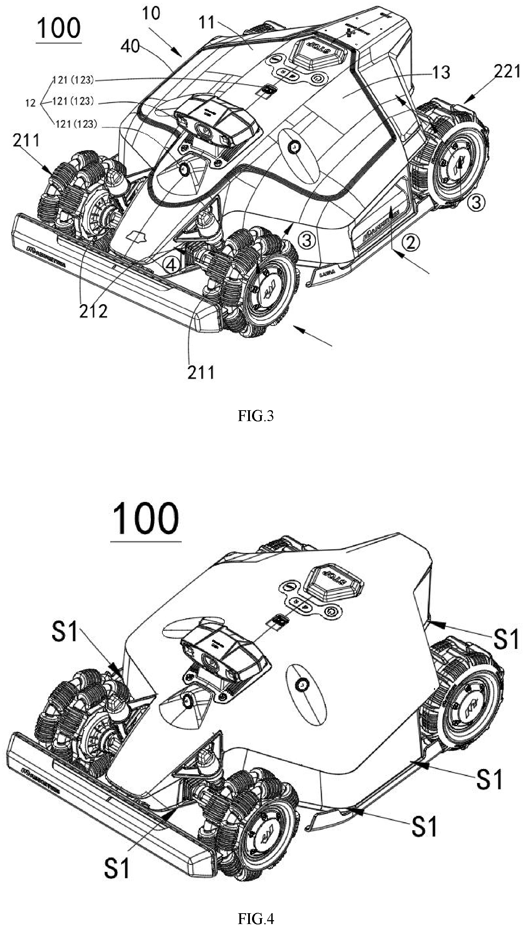

Referring to FIG.3, in response to the number of components to be protected 12 being a plurality, the number of repelling device 40 is one, and the repelling device 40 is disposed on the peripheral side of the plurality of components to be protected 12, so as to form the protective region 13 at the peripheral side of the plurality of components to be protected 12 and repel the to-be-repelled subject that is about to enter the protective region 13, for example, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject. For example, one repelling device 40 surrounds and forms one protective region 13, and the plurality of components to be protected 12 are all disposed within the protective region 13.

Referring to FIG.2, in response to the number of components to be protected 12 being a plurality, the number of repelling devices 40 is a plurality. Optionally, the plurality of repelling device 40 may surround and form one protective region 13, and the plurality of components to be protected 12 are all disposed within the protective region 13; or the plurality of repelling device 40 may surround and form a plurality of protective regions 13, and the plurality of components to be protected 12 are respectively disposed within the plurality of protective regions 13, so as to repel the to-be-repelled subject that is about to enter the plurality of protective regions 13, for example, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject.

Generally, a part of the sensing module 121 is exposed from the body housing 11. For example, a vision sensor is exposed from the body housing 11 and collects images or light so as to position the self-propelled operating apparatus 100, detect obstacles, and the like. In response to a snail climbing onto the vision sensor on the body housing 11, the snail blocks transmission or reception of images or light by the vision sensor, thereby causing inaccurate signal collection by the vision sensor and further causing inaccurate device positioning or disordered obstacle avoidance. In addition, a lidar is exposed from the body housing 11 and transmits and receives radar signals so as to position the self-propelled operating apparatus 100 and the like. In response to a snail climbing onto the lidar on the body housing 11, the snail blocks transmission or reception of images or light by the lidar, thereby causing inaccurate signal collection by the lidar and further causing inaccurate device positioning and the like. For example, a charging electrode plate is exposed from the body housing 11 and is configured to dock with a charging interface on a charging station so as to charge the self-propelled operating apparatus 100. In response to a snail climbing onto the charging electrode plate on the body housing 11, because the charging electrode plate is made of metal, mucus secreted by the snail corrodes the charging electrode plate, thereby affecting charging efficiency of the self-propelled operating apparatus 100.

The self-propelled operating apparatus 100 provided in this disclosure comprises a device body 10, a travel device 20, and an operating device 30. At least a part of a to-be-protected component 12 is disposed on a surface of the device body 10. The self-propelled operating apparatus 100 moves by the travel device 20 disposed at the bottom of the device body 10. The operating device 30 is disposed on the device body 10 and is configured to perform a preset task, such as mowing, snow sweeping, or cleaning. The self-propelled operating apparatus 100 further comprises at least one repelling device 40. The repelling device 40 is disposed on a peripheral side of the at least one to-be-protected component 12. The repelling device 40 is configured to repel the to-be-repelled subject, so as to form a protective region 13 at the peripheral side of the at least one to-be-protected component 12 and repel the to-be-repelled subject that is about to enter the protective region 13, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject, so that the self-propelled operating apparatus 100 has a favorable repelling function and self-protection function, and reliability of the self-propelled operating apparatus 100 is improved.

Specific examples of positions of the repelling device 40 on the device body 10 are described below with reference to the drawings.

For ease of description, a portion of the self-propelled operating apparatus 100 facing the ground is defined as a bottom, and a portion of the self-propelled operating apparatus 100 facing away from the ground is defined as a top. The self-propelled operating apparatus 100 further has a side portion connected between the top and the bottom, and the side portion of the self-propelled operating apparatus 100 may be a circumferential side surface of the self-propelled operating apparatus 100. On the circumferential side surface, one end in a forward moving direction of the self-propelled operating apparatus 100 is a front end, and one end in a backward moving direction of the self-propelled operating apparatus 100 is a tail end. The self-propelled operating apparatus 100 further has two side surfaces connected between the top and the bottom, and the two side surfaces are referred to as a first side surface and a second side surface, respectively.

In response to the self-propelled operating apparatus 100 being placed on the ground, paths by which the to-be-repelled subject climbs onto the self-propelled operating apparatus 100 comprise the following. Referring to FIG.1, pathway 1: the to-be-repelled subject climbs from the front traveling wheel device 21 (for example, a caster wheel) and the bottom of the self-propelled operating apparatus 100 to a position on the circumferential side surface of the self-propelled operating apparatus 100 near the bottom, as indicated by arrow (1) in FIG.1. Referring to FIG.3, pathway 2: the to-be-repelled subject climbs from a stone, a step, a wall, or the like near the self-propelled operating apparatus 100 to a position on the circumferential side surface of the self-propelled operating apparatus 100 near the top, as indicated by arrow (2) in FIG.3. Referring to FIG.3, pathway 3: the to-be-repelled subject climbs from the rear traveling wheel 221 to a position on the circumferential side surface of the self-propelled operating apparatus 100 near the top, as indicated by arrow (3) in FIG.3. Referring to FIG.2 and FIG.3, pathway 4: the to-be-repelled subject climbs through a connecting structure between a traveling wheel and the body housing 11, namely the first connecting structure 212 or the second connecting structure 222, to a position on the circumferential side surface of the self-propelled operating apparatus 100 near the top, as indicated by arrow (4) in FIG.2 and FIG.3.

Referring to FIG.4 to FIG.9, the repelling device 40 is disposed to surround a side portion of the device body 10. In other words, a disposition path of the repelling device 40 is at least disposed at the side portion of the device body 10.

Here, a region surrounded and formed by the repelling device 40 on the surface of the device body 10 is the protective region 13. It should be noted that the side portion of the device body 10 may be the above-described circumferential side surface of the self-propelled operating apparatus 100.

In a first optional embodiment, referring to FIG.1 and FIG.4, the repelling device 40 is disposed around the circumferential side surface of the device body 10 at a position near the bottom. In other words, the disposition path of the repelling device 40 is at least disposed on the circumferential side surface of the device body 10 at a position near the bottom, for example, the position indicated by S1 in FIG.4.

Here, the region surrounded and formed by the repelling device 40 on the surface of the device body 10 is the protective region 13. It should be noted that the circumferential side surface of the device body 10 may be the above-described circumferential side surface of the self-propelled operating apparatus 100, and the bottom of the device body 10 may be the above-described bottom of the self-propelled operating apparatus 100.

In this embodiment, by disposing the repelling device 40 around the circumferential side surface of the device body 10 at a position near the bottom, the to-be-repelled subject climbing along pathway 1, namely climbing from the front traveling wheel device 21 and the bottom of the self-propelled operating apparatus 100 to the position on the circumferential side surface of the self-propelled operating apparatus 100 near the bottom, may be effectively repelled. In response to the to-be-repelled subject climbing along pathway 1 to the position on the circumferential side surface of the self-propelled operating apparatus 100 near the bottom, the subject encounters the repelling device 40. The repelling device 40 blocks the subject from continuing forward by electrical stimulation such as releasing a small current, or by physical stimulation such as providing spikes, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject, so that the self-propelled operating apparatus 100 has a favorable repelling function and self-protection function, and reliability of the self-propelled operating apparatus 100 is improved.

Optionally, in response to the to-be-repelled subject climbing along pathway 2, namely climbing from a stone, a step, a wall, or the like near the self-propelled operating apparatus 100 to a position on the circumferential side surface of the self-propelled operating apparatus 100 near the top, or along pathway 3, namely climbing from the rear traveling wheel 221 to a position on the circumferential side surface of the self-propelled operating apparatus 100 near the top, or along pathway 4, namely climbing from the first connecting structure 212 or the second connecting structure 222 to a position on the circumferential side surface of the self-propelled operating apparatus 100 near the top, the subject may directly bypass the repelling device 40 provided in the first optional embodiment. Based on this, this disclosure further provides the following disposition positions of the repelling device 40.

In a second optional embodiment, referring to FIG.2, FIG.3, and FIG.5, the repelling device 40 is disposed around the side portion of the device body 10 at a position higher than the above-mentioned first connecting structure 212 and second connecting structure 222. In response to the to-be-repelled subject climbing along the first connecting structure 212 or the second connecting structure 222, namely pathway 4, to the circumferential side surface of the self-propelled operating apparatus 100, the subject encounters the repelling device 40. The repelling device 40 blocks the subject from continuing forward by electrical stimulation such as releasing a small current, or by physical stimulation such as providing spikes, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject, so that the self-propelled operating apparatus 100 has a favorable repelling function and self-protection function, and reliability of the self-propelled operating apparatus 100 is improved.

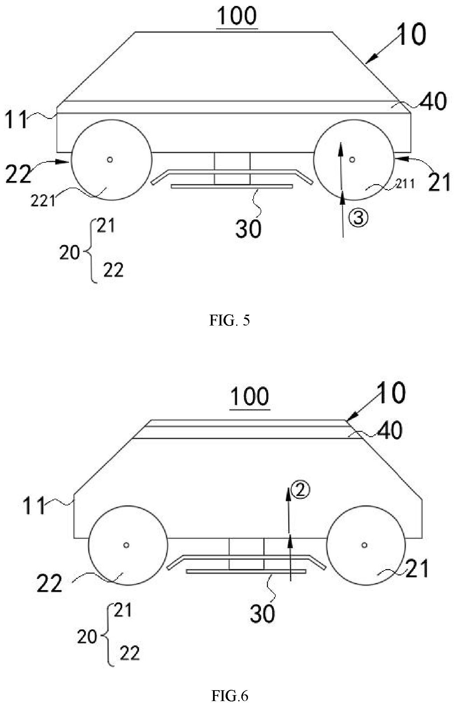

In a further optional arrangement, referring to FIG.5, the disposition path of the repelling device 40 is disposed at the side portion of the device body 10 and is higher than the above-mentioned front traveling wheels 211 and rear traveling wheels 221. In response to the to-be-repelled subject climbing along the rear traveling wheel 221, namely pathway 3, to the circumferential side surface of the nearby self-propelled operating apparatus 100, the subject encounters the repelling device 40. The repelling device 40 blocks the subject from continuing forward by electrical stimulation such as releasing a small current, or by physical stimulation such as providing spikes, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject, so that the self-propelled operating apparatus 100 has a favorable repelling function and self-protection function, and reliability of the self-propelled operating apparatus 100 is improved.

Because the repelling device 40 in this embodiment is disposed around the circumferential side surface of the device body 10, in response to the to-be-repelled subject climbing along pathway 2, namely climbing from a stone, a step, a wall, or the like near the self-propelled operating apparatus 100 to the circumferential side surface of the self-propelled operating apparatus 100, the subject encounters the repelling device 40. The repelling device 40 blocks the subject from continuing forward by electrical stimulation such as releasing a small current, or by physical stimulation such as providing spikes, such that the to-be-repelled subject stops moving or changes a moving direction in response to contacting the repelling device 40, thereby preventing the to-be-repelled subject from entering the protective region 13 and further preventing the to-be-protected component 12 from being blocked by the to-be-repelled subject or affected by mucus secreted by the to-be-repelled subject, so that the self-propelled operating apparatus 100 has a favorable repelling function and self-protection function, and reliability of the self-propelled operating apparatus 100 is improved.

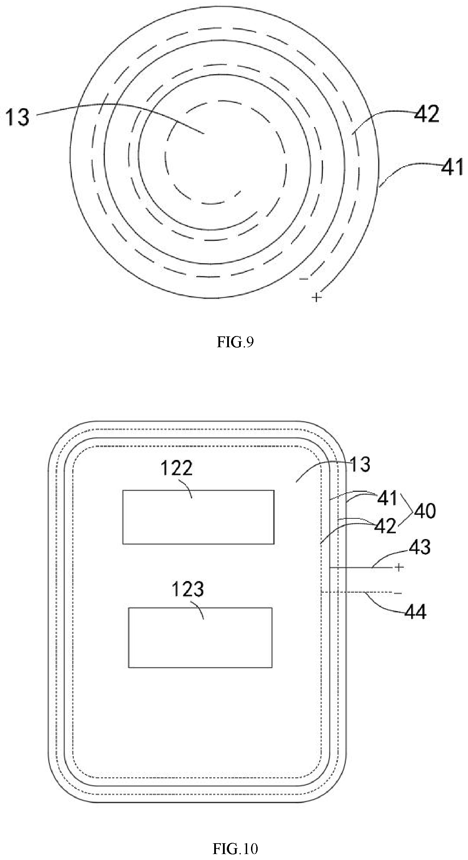

In a further optional arrangement, referring to FIG.6 and FIG.9, the repelling device 40 may be disposed around the circumferential side surface of the device body 10 at a position near the top. In this way, a disposition position of the repelling device 40 is relatively high, and the protective region 13 surrounded and formed by the repelling device 40 is close to the top of the device body 10, namely the top of the self-propelled operating apparatus 100. In response to the to-be-repelled subject climbing along pathway 2, namely climbing from a stone, a step, a wall, or the like near the self-propelled operating apparatus 100 to the circumferential side surface of the self-propelled operating apparatus 100, even if the stone, the step, the wall, or the like used by the subject is relatively high, the subject still does not enter the protective region 13 surrounded and formed by the repelling device 40.

Referring to FIG.2 and FIG.3, the repelling device 40 may further be disposed around the top of the device body 10, and the top of the device body 10 is provided with a to-be-protected component 12. By further disposing the repelling device 40 around the top of the device body 10, the to-be-protected component 12 at the top may be protected.

In a further optional arrangement, the repelling device 40 may further be disposed around both the top and the side portion of the device body 10. In this embodiment, one repelling device 40 is disposed around the side portion of the device body 10, and another repelling device 40 is disposed around the top of the device body 10, thereby providing dual protection for the to-be-protected component 12 at the top. Snails climbing onto the device body 10 through the above-described pathway 1, pathway 2, pathway 3, and pathway 4 may be effectively blocked.

Specific examples of a structure of the to-be-protected component 12 and positions of the repelling device 40 are described below in the following embodiments of this disclosure.

Optionally, referring to FIG. 1 and FIG. 2, the at least one to-be-protected component 12 comprises a sensor module 123. The repelling device 40 is disposed around a peripheral side of the sensor module 123. The sensor module 123 comprises, but is not limited to, the sensing module 121. The sensing module 121 comprises, but is not limited to, at least one of a vision sensor, an ultrasonic sensor, a lidar, a rain detector, and a humidity sensor.

In this embodiment, by disposing the repelling device 40 around the peripheral side of the sensor module 123, the sensor module 123 is disposed within the protective region 13, thereby preventing the to-be-repelled subject from entering the protective region 13 and further preventing the sensor module 123 from being blocked by the to-be-repelled subject or affected by mucus secreted by the to-be-repelled subject, which would otherwise cause inaccurate detection and similar problems, thereby improving detection accuracy and reliability of the self-propelled operating apparatus 100.

In a further optional arrangement, the sensor module 123 is disposed at a top of the device body 10 and/or at a tail portion of the device body 10. Specific embodiments comprise the following.

Referring to FIG.2, the sensor module 123 is disposed at the top of the device body 10. The sensor module 123 comprises at least one of a vision sensor, an ultrasonic sensor, a lidar, a rain detector, and a humidity detector. The repelling device 40 is disposed around the top of the device body 10 and surrounds a peripheral side of the sensor module 123 comprising at least one of the vision sensor, the ultrasonic sensor, the lidar, the rain detector, and the humidity detector, so as to effectively protect at least one of the vision sensor, the ultrasonic sensor, the lidar, the rain detector, and the humidity detector and avoid blockage of the at least one sensor by the to-be-repelled subject or influence from mucus secreted by the to-be-repelled subject.

Referring to FIG.1, the sensor module 123 is disposed at the tail portion of the device body 10. The sensor module 123 comprises, for example, an infrared sensor. The repelling device 40 is disposed around the tail portion of the device body 10 and surrounds a peripheral side of the sensor module 123, such as the infrared sensor, so as to effectively protect the infrared sensor and the like and avoid blockage of at least one of the sensors by the to-be-repelled subject or influence from mucus secreted by the to-be-repelled subject.

Referring to FIG.2, the sensor module 123 is disposed at both the top and the tail portion of the device body 10. The sensor module 123 comprises at least one of a vision sensor, an ultrasonic sensor, a lidar, a rain detector, and a humidity detector, as well as an infrared sensor and the like. The repelling device 40 is disposed around the top and the tail portion of the device body 10 and surrounds peripheral sides of the sensor module 123 comprising at least one of the vision sensor, the ultrasonic sensor, the lidar, the rain detector, and the humidity detector, as well as the infrared sensor and the like, so as to effectively protect these sensors and avoid blockage of the sensors by the to-be-repelled subject or influence from mucus secreted by the to-be-repelled subject.

Optionally, referring to FIG.2, the at least one to-be-protected component 12 comprises a charging device 122. The repelling device 40 is disposed around a peripheral side of the charging device 122. The charging device 122 comprises, but is not limited to, a charging interface, a charging electrode plate, or a charging terminal.

In this embodiment, by disposing the repelling device 40 around peripheral sides of the charging device 122 such as a charging interface, a charging electrode plate, or a charging terminal, the charging device 122 is disposed within the protective region 13, thereby preventing the to-be-repelled subject from entering the protective region 13 and further preventing the charging device 122 such as a charging interface, a charging electrode plate, or a charging terminal from being blocked by the to-be-repelled subject or affected by mucus secreted by the to-be-repelled subject, which would otherwise cause low charging efficiency, inability to charge, or even a charging short circuit, thereby improving charging protection capability of the self-propelled operating apparatus 100.

In a further optional arrangement, the charging device 122 is disposed at a tail portion, a front end, or a side surface of the device body 10. Specific embodiments comprise the following.

The charging device 122, such as a charging interface, a charging electrode plate, or a charging terminal, is disposed at the tail portion of the device body 10. The repelling device 40 is disposed around the tail portion of the device body 10 and surrounds a peripheral side of the charging device 122, such as a charging interface, a charging electrode plate, or a charging terminal, so as to effectively protect the charging device 122 and avoid blockage of the charging device 122 by the to-be-repelled subject or corrosion by mucus secreted by the to-be-repelled subject, thereby improving charging protection capability of the self-propelled operating apparatus 100.

The charging device 122, such as a charging interface, a charging electrode plate, or a charging terminal, is disposed at the front end of the device body 10. The repelling device 40 is disposed around the front end of the device body 10 and surrounds a peripheral side of the charging device 122, such as a charging interface, a charging electrode plate, or a charging terminal, so as to effectively protect the charging device 122 and avoid blockage of the charging device 122 by the to-be-repelled subject or corrosion by mucus secreted by the to-be-repelled subject, thereby improving charging protection capability of the self-propelled operating apparatus 100.

The charging device 122, such as a charging interface, a charging electrode plate, or a charging terminal, is disposed at a side surface of the device body 10, including the first side surface and/or the second side surface. The repelling device 40 is disposed around the side surface of the device body 10 and surrounds a peripheral side of the charging device 122, such as a charging interface, a charging electrode plate, or a charging terminal, so as to effectively protect the charging device 122 and avoid blockage of the charging device 122 by the to-be-repelled subject or corrosion by mucus secreted by the to-be-repelled subject, thereby improving charging protection capability of the self-propelled operating apparatus 100.

Optionally, the repelling device 40 is configured to generate a repelling current to repel the to-be-repelled subject.

In this embodiment, the repelling device 40 is an electrical stimulation device. In response to a snail, as the to-be-repelled subject, crawling into contact with the electrical stimulation device, a microcurrent generated by the electrical stimulation device is conducted to the body of the snail, such that the snail receives a slight electric shock and feels discomfort, thereby changing its crawling direction and moving away from the region where the repelling device 40 is disposed, namely the protective region 13, so as to repel the snail and prevent the to-be-protected component 12 within the protective region 13 from being blocked by the snail or affected by mucus secreted by the snail.

Optionally, the repelling current generated by the repelling device 40 is a microcurrent. An intensity of the repelling current generated by the repelling device 40 is less than a first preset current intensity. The first preset current intensity is 2 mA. This disclosure does not particularly limit the intensity of the repelling current generated by the repelling device 40. Optionally, the repelling current may be in a milliampere range or a microampere range. The microcurrent does not pose a threat to a human body and does not cause fatal injury to a snail, but only causes discomfort to the snail. For example, the intensity of the repelling current may be, but is not limited to, any one of 10 µA, 50 µA, 100 µA, 200 µA, 300 µA, 400 µA, 500 µA, 600 µA, 700 µA, 800 µA, 900 µA, and 1 mA, or a value between any two of them.

Specific examples of structures of the repelling device 40 are described below in the following embodiments. Of course, the repelling device 40 provided in this disclosure comprises, but is not limited to, the following embodiments.

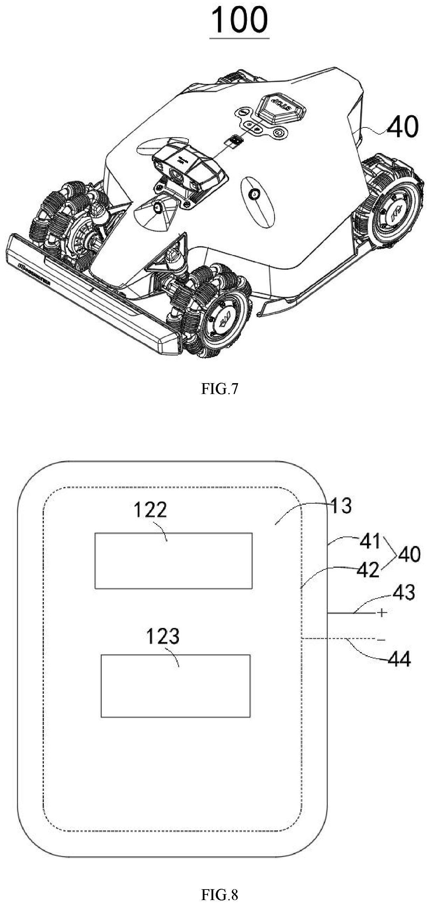

In a first optional embodiment of the repelling device 40, referring to FIG.8, the repelling device 40 comprises a first electrode 41 and a second electrode 42.

Optionally, arrangement modes of the first electrodes 41 and the second electrodes 42 include, but are not limited to, a parallel arrangement, a non-parallel and non-intersecting arrangement, and an intersecting but electrically isolated arrangement. In this embodiment, a parallel arrangement between the first electrodes 41 and the second electrodes 42 are taken as an example. This embodiment does not particularly limit extension directions of the first electrodes 41 and the second electrodes 42.

In response to the to-be-repelled subject simultaneously contacting the first electrodes 41 and the second electrodes 42, a conductive circuit is formed among the first electrodes 41, the to-be-repelled subject, and the second electrodes 42, and a repelling current is generated. The repelling current is a microcurrent, and the microcurrent is conducted to the body of the snail, such that the snail receives a slight electric shock and feels discomfort, thereby changing its crawling direction and moving away from the region where the repelling device 40 is disposed, namely the protective region 13, so as to repel the snail and prevent the to-be-protected component 12 within the protective region 13 from being blocked by the snail or affected by mucus secreted by the snail.

In a further optional arrangement, the first electrodes 41 are electrically connected to a positive terminal of a power source, and the second electrodes 42 are electrically connected to a negative terminal of the power source.

Here, the power source comprises, but is not limited to, a power source of the self-propelled operating apparatus 100, a micro power source formed by a voltage provided by the power source of the self-propelled operating apparatus 100, or a dedicated repelling power source carried by the repelling device 40. Specific examples of the power source are described later.

In this embodiment, the first electrodes 41 are a positive electrode, and the second electrodes 42 are a negative electrode. In an initial state, the first electrodes 41 and the second electrodes 42 are in an open-circuit state. In response to the to-be-repelled subject simultaneously contacting the first electrodes 41 and the second electrodes 42, electrical conduction is established between the first electrodes 41 and the second electrodes 42. A preset potential difference exists between the first electrodes 41 and the second electrodes 42. In response to the to-be-repelled subject simultaneously contacting the first electrodes 41 and the second electrodes 42, a conductive circuit is formed among the first electrodes 41, the to-be-repelled subject, and the second electrodes 42, and a repelling current is generated, such that the to-be-repelled subject receives a slight electric shock and feels discomfort, thereby changing a crawling direction and moving away from the region where the repelling device 40 is disposed, namely the protective region 13.

Optionally, a spacing between the first electrodes 41 and the second electrodes 42 are greater than or equal to a first preset spacing and less than or equal to a second preset spacing.

For example, the first preset spacing is 0.1 cm, and the second preset spacing is 1 cm. In response to the spacing between the first electrodes 41 and the second electrodes 42 being excessively large, some small snails may be unable to simultaneously contact the first electrodes 41 and the second electrodes 42, such that a conductive circuit cannot be formed between the first electrodes 41 and the second electrodes 42. As a result, some small snails do not generate a repelling current when passing the repelling device 40, and the repelling device 40 cannot prevent some small snails from blocking the to-be-protected component 12 or affecting the to-be-protected component 12 with secreted mucus.

In response to the spacing between the first electrodes 41 and the second electrodes 42 being excessively small, the first electrodes 41 and the second electrodes 42 may readily directly conduct with each other, thereby causing a short circuit.

As a further example, the first preset spacing is 0.1 cm, and the second preset spacing is 0.5 cm. Generally, a width of a snail is about 0.6 cm. By setting the spacing between the first electrodes 41 and the second electrodes 42 to be greater than or equal to 0.1 cm and less than or equal to 0.5 cm, even if the snail crawls along a gap between the first electrodes 41 and the second electrodes 42, the snail still simultaneously contacts the first electrodes 41 and the second electrodes 42, thereby avoiding the snail continuing to crawl along the gap between the first electrodes 41 and the second electrodes 42, repelling the snail away from the repelling device 40 at an early stage, further reducing a probability that the snail enters the protective region 13, and improving a repelling rate for the snail.

Specific examples of shapes of the first electrodes 41 and the second electrodes 42 are described below in the following embodiments of this disclosure.

In a first optional embodiment of an electrode shape, referring to FIG.8, the first electrodes 41 are an annular electrode, and the second electrodes 42 are an annular electrode.

Taking an example in which the first electrodes 41 are annular and the second electrodes 42 are annular, the first electrodes 41 are disposed around the peripheral side of the to-be-protected component 12, specifically based on the above-described position design of the repelling device 40.

Referring to FIG.8, the repelling device 40 further comprises a first extension electrode 43. One end of the first extension electrode 43 is electrically connected to the first electrodes 41, and another end of the first extension electrode 43 is electrically connected to a positive terminal of the power source. For example, the positive terminal of the power source is disposed inside the device body 10, the first electrodes 41 are disposed on an outer surface of the device body 10, one end of the first extension electrode 43 contacts the outer surface of the device body 10, and the other end enters the device body 10 and extends to a position of the positive terminal of the power source.

The first electrodes 41 comprises, but is not limited to, a metal trace. The first extension electrode 43 comprises, but is not limited to, a wire including a protective sleeve.

The second electrodes 42 are also disposed around the peripheral side of the to-be-protected component 12, specifically based on the above-described position design of the repelling device 40. In one embodiment, the second electrodes 42 are disposed between the first electrodes 41 and the to-be-protected component 12. In other embodiments, the first electrodes 41 are disposed between the second electrodes 42 and the to-be-protected component 12.

Referring to FIG.8, the repelling device 40 further comprises a second extension electrode 44. One end of the second extension electrode 44 is electrically connected to the second electrodes 42, and another end of the second extension electrode 44 is electrically connected to a negative terminal of the power source. For example, the negative terminal of the power source is disposed inside the device body 10, the second electrodes 42 are disposed on an outer surface of the device body 10, one end of the second extension electrode 44 contacts the outer surface of the device body 10, and the other end enters the device body 10 and extends to a position of the negative terminal of the power source.

The second electrodes 42 comprises, but is not limited to, a metal trace. The second extension electrode 44 comprises, but is not limited to, a wire including a protective sleeve.

In a second optional embodiment of an electrode shape, referring to FIG.9, the first electrodes 41 are a planar spiral electrode, namely a first planar spiral electrode. One end of the first planar spiral electrode is electrically connected to a positive terminal of the power source. The first planar spiral electrode is disposed in a planar spiral shape around the peripheral side of the to-be-protected component 12, and another end of the first planar spiral electrode is an open-circuit end.

The second electrodes 42 are a planar spiral electrode, namely a second planar spiral electrode. One end of the second planar spiral electrode is electrically connected to a negative terminal of the power source. The second planar spiral electrode is disposed in a planar spiral shape around the peripheral side of the to-be-protected component 12, and another end of the second planar spiral electrode is an open-circuit end.

This disclosure does not particularly limit a number of turns of the first planar spiral electrode or a number of turns of the second planar spiral electrode. Optionally, the first planar spiral electrode winds one turn, the second planar spiral electrode winds one turn, and the first planar spiral electrode and the second planar spiral electrode are spaced apart. A potential difference is formed between the first planar spiral electrode and the second planar spiral electrode, thereby forming one electrical-stimulation protective barrier. In a further optional arrangement, the first planar spiral electrode winds two turns, and the second planar spiral electrode winds one turn. A first turn of the first planar spiral electrode, the second planar spiral electrode, and a second turn of the first planar spiral electrode is successively spaced apart. A potential difference is formed between the first turn of the first planar spiral electrode and the second planar spiral electrode, thereby forming a first electrical-stimulation protective barrier, and a potential difference is formed between the second planar spiral electrode and the second turn of the first planar spiral electrode, thereby forming a second electrical-stimulation protective barrier.

In this embodiment, compared with the first optional electrode shape, the first extension electrode 43 and the second extension electrode 44 do not need to be additionally provided, and multiple turns of positive electrodes and multiple turns of negative electrodes may still be arranged alternately and successively at intervals, thereby forming multiple electrical-stimulation protective barriers.

This disclosure does not particularly limit a number of the first electrodes 41 or a number of the second electrodes 42.

Optionally, the number of the first electrodes 41 are one, and the number of the second electrodes 42 are one.

Taking an example in which the first electrodes 41 are annular and the second electrodes 42 are annular, the first electrodes 41 are disposed around the peripheral side of the to-be-protected component 12, specifically based on the above-described position design of the repelling device 40. The second electrodes 42 are also disposed around the peripheral side of the to-be-protected component 12, specifically based on the above-described position design of the repelling device 40.

In one embodiment, the second electrodes 42 are disposed between the first electrodes 41 and the to-be-protected component 12. In other embodiments, the first electrodes 41 are disposed between the second electrodes 42 and the to-be-protected component 12. A potential difference exists between the first electrodes 41 and the second electrodes 42, thereby forming a first electrical-stimulation protective barrier.

In a further optional arrangement, referring to FIG.10, there are multiple first electrodes 41 and multiple second electrodes 42. The number of the first electrodes 41 are a plurality, and the number of the second electrodes 42 are a plurality. the multiple first electrodes 41 and the multiple second electrodes 42 are arranged alternately at intervals. For example, the arrangement is first electrode 41, second electrode 42, first electrode 41, second electrode 42, first electrode 41, second electrode 42, and so on.

Taking an example in which the first electrodes 41 are annular and the second electrodes 42 are annular, the plurality of first electrodes 41 are a plurality of annular electrodes including different radial dimensions, and the plurality of second electrodes 42 are a plurality of annular electrodes including different radial dimensions. The first electrodes 41, the second electrodes 42, the first electrodes 41, and the second electrodes 42 are successively arranged in an alternating manner. In this way, a potential difference is formed between each adjacent two electrodes, thereby forming one electrical-stimulation protective barrier outside the protective region 13. This embodiment may form multiple electrical-stimulation protective barriers outside the protective region 13, so as to prevent the to-be-repelled subject from directly entering the protective region 13 after passing a first electrical-stimulation protective barrier, such that even if the to-be-repelled subject continues moving toward the protective region 13 after passing the first electrical-stimulation protective barrier, the subject encounters a next electrical-stimulation protective barrier, thereby causing the subject to move in a direction away from the protective region 13 and improving a repelling rate for the to-be-repelled subject.

In other embodiments, the plurality of first electrodes 41 and the plurality of second electrodes 42 may further be arranged as first electrode 41, second electrode 42, second electrode 42, first electrode 41, first electrode 41, and the like. In some cases, because a gap exists between the to-be-repelled subject and the surface of the device body 10, the subject may fail to contact the first electrodes 41 or the second electrodes 42, such that the first electrodes 41 and the second electrodes 42 do not conduct with each other and a repelling current cannot be generated. By providing two or more first electrodes 41 and two or more second electrodes 42 arranged alternately and successively, even when a gap exists between the to-be-repelled subject and the surface of the device body 10, a probability that the to-be-repelled subject contacts the first electrodes 41 or the second electrodes 42 may be increased, thereby increasing a probability of generating a repelling current in response to encountering the to-be-repelled subject and increasing an interception rate for the to-be-repelled subject.

Optionally, voltages of the plurality of first electrodes 41 are the same, and voltages of the plurality of second electrodes 42 are the same. That is, the plurality of first electrodes 41 are all electrically connected to a positive terminal of the power source, and the plurality of second electrodes 42 are all electrically connected to a negative terminal of the power source.

In a further optional arrangement, referring to FIG.10, the repelling device 40 further comprises a first extension electrode 43. The first extension electrode 43 intersects the plurality of first electrodes 41 and is electrically conductive with the plurality of first electrodes 41, and the first extension electrode 43 intersects the plurality of second electrodes 42 and is electrically insulated from the plurality of second electrodes 42. One part of the first extension electrode 43 is electrically connected to the plurality of first electrodes 41, and another part of the first extension electrode 43 is electrically connected to a positive terminal of the power source. For example, the positive terminal of the power source is disposed inside the device body 10, the first electrodes 41 are disposed on an outer surface of the device body 10, one part of the first extension electrode 43 contacts the outer surface of the device body 10, and the first electrodes 41 include, but are not limited to, metal traces, while one part of the first extension electrode 43 is a metal trace. Another part of the first extension electrode 43 enters the device body 10 and extends to a position of the positive terminal of the power source. Another part of the first extension electrode 43 comprises, but is not limited to, a wire including a protective sleeve.

This embodiment may enable the plurality of first electrodes 41 to be electrically connected to the positive terminal of the power source through the same first extension electrode 43. Compared with a structure in which each first electrode 41 is electrically connected to the positive terminal of the power source through one electrical connection trace, a number of electrical connection traces may be reduced, and a layout of the electrical connection traces may be optimized.

In a further optional arrangement, referring to FIG.10, the repelling device 40 further comprises a second extension electrode 44. The second extension electrode 44 intersects the plurality of second electrodes 42 and is electrically conductive with the plurality of second electrodes 42, and the second extension electrode 44 intersects the plurality of first electrodes 41 and is electrically insulated from the plurality of first electrodes 41. One part of the second extension electrode 44 is electrically connected to the plurality of second electrodes 42, and another part of the second extension electrode 44 is electrically connected to a negative terminal of the power source. For example, the negative terminal of the power source is disposed inside the device body 10, the second electrodes 42 are disposed on an outer surface of the device body 10, one part of the second extension electrode 44 contacts the outer surface of the device body 10, the second electrodes 42 include, but are not limited to, metal traces, and one part of the second extension electrode 44 is a metal trace. Another part of the second extension electrode 44 enters the device body 10 and extends to a position of the negative terminal of the power source. Another part of the second extension electrode 44 comprises, but is not limited to, a wire including a protective sleeve.

This embodiment may enable the plurality of second electrodes 42 to be electrically connected to the negative terminal of the power source through the same second extension electrode 44. Compared with a structure in which each second electrode 42 is electrically connected to the negative terminal of the power source through one electrical connection trace, a number of electrical connection traces may be reduced, and a layout of the electrical connection traces may be optimized.

In other embodiments, voltages of the plurality of first electrodes 41 may be different, and the plurality of first electrodes 41 may be electrically connected to different positive output ports of the power source respectively so as to load different positive voltages. The plurality of second electrodes 42 are all electrically connected to the negative terminal of the power source. The first electrodes 41 and the second electrodes 42 are alternately arranged to form electrical-stimulation protective barriers including different potential differences. For example, a potential difference between a first electrode 41 and a first second electrode 42 is a first voltage, and a potential difference between the first second electrode 42 and a second first electrode 41 is a second voltage, wherein the second voltage may be greater than the first voltage. In this way, even if some larger subjects to be repelled pass the first electrical-stimulation protective barrier corresponding to the first voltage, if the subjects continue moving toward the protective region 13, the subjects are subjected to a second electrical-stimulation protective barrier corresponding to a higher voltage, namely the second voltage, and so on, until some larger subjects to be repelled change direction under electrical stimulation and move away from the protective region 13. The design of the repelling device 40 in this embodiment not only repels small subjects to be repelled, but also repels larger subjects to be repelled, thereby increasing an interception rate for the subjects to be repelled and improving a protection rate for the to-be-protected component.

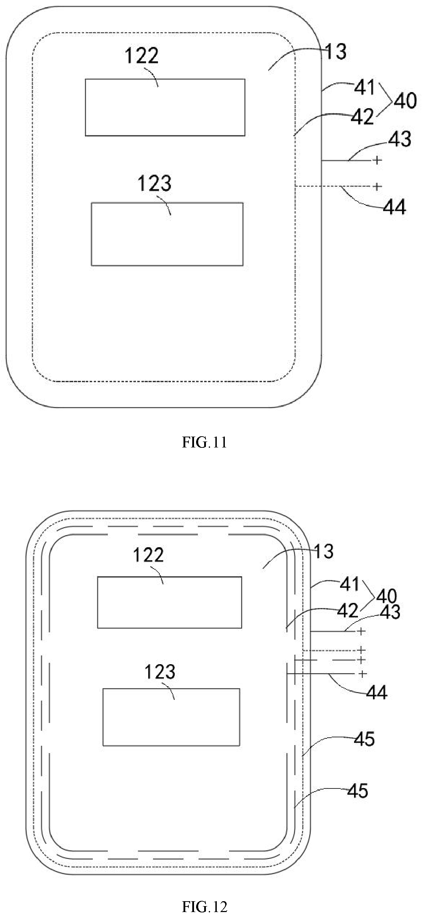

In a second optional embodiment of the repelling device 40, this embodiment is generally similar to the first optional embodiment. A main difference between this embodiment and the first optional embodiment is that, referring to FIG.11, the first electrodes 41 and the second electrodes 42 are electrically connected to two positive voltage output terminals of the power source, respectively. A potential difference exists between the two positive voltage output terminals.

For example, the two positive voltage output terminals of the power source respectively comprise a first voltage output terminal and a second voltage output terminal. The first voltage output terminal outputs a first voltage, and the second voltage output terminal outputs a second voltage. The first electrodes 41 are electrically connected to the first voltage output terminal so as to load the first voltage. The second electrodes 42 are electrically connected to the second voltage output terminal so as to load the second voltage. The first voltage and the second voltage are different, namely a potential difference exists between the first electrodes 41 and the second electrodes 42. In an initial state, the first electrodes 41 and the second electrodes 42 are in an open-circuit state. In response to the to-be-repelled subject simultaneously contacting the first electrodes 41 and the second electrodes 42, the first electrodes 41 and the second electrodes 42 are electrically conducted. Because a potential difference exists between the first electrodes 41 and the second electrodes 42, a conductive circuit is formed among the first electrodes 41, the to-be-repelled subject, and the second electrodes 42, and a repelling current is generated, such that the to-be-repelled subject receives a slight electric shock and feels discomfort, thereby changing a crawling direction and moving away from the region where the repelling device 40 is disposed, namely the protective region 13.

In this embodiment, because an intensity of the repelling current is relatively small, for example, the repelling current is about several hundred microamperes, a potential difference between the first electrodes 41 and the second electrodes 42 are correspondingly small. This embodiment forms the first electrodes 41 and the second electrodes 42 using two voltages with a relatively small difference, thereby forming a relatively small potential difference and further forming a slight repelling current.

Here, a shape of the first electrodes 41 and an electrical connection mode between the first electrodes 41 and the first voltage output terminal of the power source may refer to a shape of the first electrodes 41 and an electrical connection mode between the first electrodes 41 and the positive terminal of the power source in the first embodiment.

Here, a shape of the second electrodes 42 and an electrical connection mode between the second electrodes 42 and the second voltage output terminal of the power source may refer to a shape of the second electrodes 42 and an electrical connection mode between the second electrodes 42 and a positive terminal of the power source in the first embodiment.

A number of the first electrodes 41 may be one or more, and a number of the second electrodes 42 may be one or more. When there are multiple first electrodes 41 and multiple second electrodes 42, the first electrodes 41 and the second electrodes 42 may be alternately arranged successively.

In a third optional embodiment of the repelling device 40, this embodiment is generally similar to the second optional embodiment. A difference from the second optional embodiment is that, in this embodiment, referring to FIG.12, the repelling device 40 further comprises a plurality of third electrodes 45. The plurality of third electrodes 45 are disposed between the first electrodes 41 and the second electrodes 42.

Further, a first potential difference is formed between the third electrode 45 and the first electrodes 41, and a second potential difference is formed between the third electrode 45 and the second electrodes 42. The first potential difference and the second potential difference are different.

Specifically, three positive voltage output terminals of the power source respectively comprise a first voltage output terminal, a second voltage output terminal, and a third voltage output terminal. The first voltage output terminal outputs a first voltage, the second voltage output terminal outputs a second voltage, and the third voltage output terminal outputs a third voltage.

The first electrodes 41 are electrically connected to the first voltage output terminal so as to load the first voltage. The second electrodes 42 are electrically connected to the second voltage output terminal so as to load the second voltage. The third electrode 45 is electrically connected to the third voltage output terminal so as to load the third voltage.

The first voltage and the third voltage are different, namely a first potential difference exists between the first electrodes 41 and the third electrode 45.

The third voltage and the second voltage are different, namely a second potential difference exists between the third electrode 45 and the second electrodes 42.

In an initial state, the first electrodes 41 and the third electrode 45 are in an open-circuit state. In response to the to-be-repelled subject simultaneously contacting the first electrodes 41 and the third electrode 45, the first electrodes 41 and the third electrode 45 are electrically conducted. Because the first electrodes 41 and the third electrode 45 have the first potential difference, a conductive circuit is formed among the first electrodes 41, the to-be-repelled subject, and the third electrode 45, and a first repelling current is generated, such that the to-be-repelled subject receives a slight electric shock and feels discomfort, thereby changing a crawling direction and moving away from the region where the repelling device 40 is disposed, namely the protective region 13.

Further, the second potential difference may be greater than the first potential difference. In this way, a repelling current generated when the third electrode 45 and the second electrodes 42 conduct is greater than a repelling current generated when the first electrodes 41 and the third electrode 45 conduct, thereby further electrically stimulating the to-be-repelled subject and causing the subject to move away from the protective region 13; or further electrically stimulating a relatively large to-be-repelled subject and causing the relatively large subject to move away from the protective region 13.

The first electrodes 41 are disposed on a side away from the to-be-protected component 12, and the second electrodes 42 are disposed on a side close to the to-be-protected component 12. In response to the to-be-repelled subject crossing a first electrical-stimulation protective barrier between the first electrodes 41 and the third electrode 45, the third electrode 45 and the second electrodes 42 are in an open-circuit state in the initial state. In response to the to-be-repelled subject simultaneously contacting the third electrode 45 and the second electrodes 42, the third electrode 45 and the second electrodes 42 are electrically conducted. Because a second potential difference exists between the third electrode 45 and the second electrodes 42, a conductive circuit is formed among the third electrode 45, the to-be-repelled subject, and the second electrodes 42, and a second repelling current is generated. The second repelling current is greater than the first repelling current, such that the to-be-repelled subject receives further electrical stimulation and feels discomfort, thereby changing a crawling direction and moving away from the region where the repelling device 40 is disposed, namely the protective region 13.

In a further optional arrangement, in a direction from the first electrodes 41 toward the second electrodes 42, potential differences between adjacent two third electrodes 45 progressively increase. In this way, in the direction from the first electrodes 41 toward the second electrodes 42, an intensity of the repelling current corresponding to electrical-stimulation protective barriers formed by adjacent two third electrodes 45 gradually increases.

On one hand, as the to-be-repelled subject climbs closer to the protective region 13, the required electrical stimulation gradually increases, thereby facilitating driving some relatively large subjects to be repelled to crawl in a direction away from the protective region 13. On the other hand, some relatively large subjects to be repelled may simultaneously contact the first electrodes 41 and the plurality of third electrodes 45, namely simultaneously receive repelling currents produced by multiple electrical-stimulation protective barriers, thereby further stimulating the relatively large subjects to be repelled to crawl in a direction away from the protective region 13.

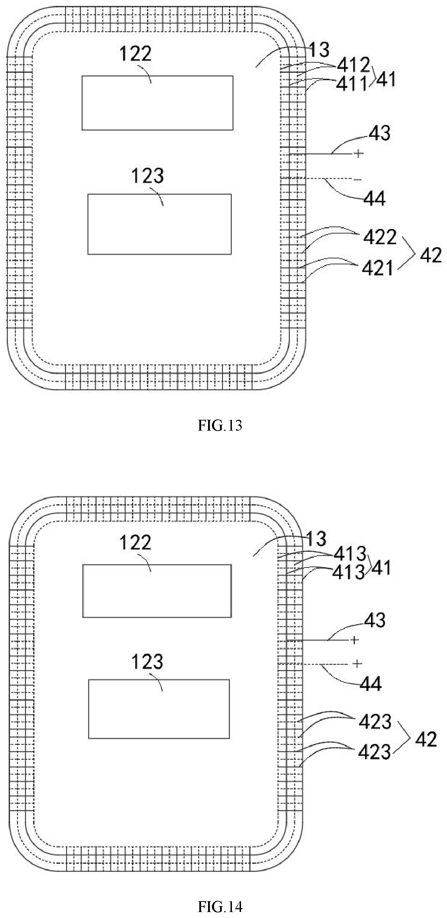

In a fourth optional embodiment of the repelling device 40, referring to FIG.13, there are multiple first electrodes 41 and multiple second electrodes 42. The number of the first electrodes 41 are a plurality, and the number of the second electrodes 42 are a plurality. The plurality of first electrodes 41 are successively spaced apart, and the plurality of second electrodes 42 are successively spaced apart. Here, an extension direction of the first electrodes 41 are a first direction, and adjacent two first electrodes 41 may be arranged in parallel or may be arranged non-parallel and non-intersecting. An extension direction of the second electrodes 42 are a second direction, and adjacent two second electrodes 42 may be arranged in parallel or may be arranged non-parallel and non-intersecting. The first direction intersects the second direction.

The plurality of first electrodes 41 and the plurality of second electrodes 42 are interlaced crosswise and lengthwise, thereby forming a grid-shaped repelling device 40. The grid-shaped repelling device 40 may increase a probability that subjects to be repelled approaching from different crawling directions simultaneously contact two electrodes including a potential difference, thereby generating a repelling current and further repelling the subjects to be repelled approaching from different crawling directions.

Optionally, referring to FIG.13, the plurality of first electrodes 41 comprise first positive electrodes 411 and first negative electrodes 412 arranged alternately. Optionally, the first positive electrodes 411 extend along the first direction, and the first negative electrodes 412 extend along the first direction. The plurality of first positive electrodes 411 and the plurality of first negative electrodes 412 are successively arranged in an alternating manner.

Referring to FIG.13, the plurality of second electrodes 42 comprise second positive electrodes 421 and second negative electrodes 422 arranged alternately. Optionally, the second positive electrodes 421 extend along the second direction, and the second negative electrodes 422 extend along the second direction. The plurality of second positive electrodes 421 and the plurality of second negative electrodes 422 are successively arranged in an alternating manner.

Further, the first positive electrodes 411 and the second negative electrodes 422 are electrically isolated from each other at intersections thereof. That is, the first positive electrodes 411 and the second negative electrodes 422 are electrically insulated from each other at the intersections thereof. Further, the first positive electrodes 411 and the second negative electrodes 422 are insulated and connected at the intersections through a first insulating portion.

The first negative electrodes 412 and the second positive electrodes 421 are electrically isolated from each other at intersections thereof. That is, the first negative electrodes 412 and the second positive electrodes 421 are electrically insulated from each other at the intersections thereof. Further, the first negative electrodes 412 and the second positive electrodes 421 are insulated and connected at the intersections through a second insulating portion.

For example, the first positive electrodes 411 are annular and are disposed around the peripheral side of the to-be-protected component 12, and the first negative electrodes 412 are also annular and are disposed around the peripheral side of the to-be-protected component 12. A first positive electrode 411, a first negative electrode 412, a second first positive electrode 411, and a second first negative electrode 412 are successively distributed from outside to inside.

A potential difference exists between the first positive electrodes 411 and the first negative electrodes 412. In an initial state, the first positive electrodes 411 and the first negative electrodes 412 are in an open-circuit state. In response to the to-be-repelled subject simultaneously contacting the first positive electrodes 411 and the first negative electrodes 412, the first positive electrodes 411 and the first negative electrodes 412 are electrically conducted. Because a potential difference exists between the first positive electrodes 411 and the first negative electrodes 412, a conductive circuit is formed among the first positive electrodes 411, the to-be-repelled subject, and the first negative electrodes 412, and a repelling current is generated, such that the to-be-repelled subject receives a slight electric shock and feels discomfort, thereby changing a crawling direction and moving away from the region where the repelling device 40 is disposed, namely the protective region 13.

The first positive electrodes 411 in this embodiment may refer to the first electrodes 41 in the first embodiment, and the first negative electrodes 412 in this embodiment may refer to the second electrodes 42 in the first embodiment.

In a further optional arrangement, the second positive electrodes 421 extend in a radial direction of the annular shape, and the second negative electrodes 422 extend in the radial direction of the annular shape. In other embodiments, the second positive electrodes 421 may further extend along other directions intersecting the first negative electrodes 412.

Each second positive electrode 421 intersects the plurality of first positive electrodes 411 and the plurality of first negative electrodes 412. Further, each first positive electrode 411 and each second positive electrode 421 are electrically connected to each other at intersections thereof. In this way, the first positive electrodes 411 and the second positive electrodes 421 carry the same positive voltage, and the plurality of first positive electrodes 411 and the plurality of second positive electrodes 421 may be electrically connected to the positive terminal of the power source through the same electrical connection trace. The second positive electrodes 421 and the first negative electrodes 412 are electrically insulated from each other at intersections thereof, thereby avoiding a short circuit.

Each second negative electrode 422 intersects the plurality of first negative electrodes 412 and the plurality of first positive electrodes 411. Further, the second negative electrodes 422 and the first negative electrodes 412 are electrically connected to each other at intersections thereof. In this way, the plurality of first negative electrodes 412 and the plurality of second negative electrodes 422 may be electrically connected to the negative terminal of the power source through the same electrical connection trace. The second negative electrodes 422 and the first positive electrodes 411 are electrically insulated from each other at intersections thereof, thereby avoiding a short circuit.

In response to the to-be-repelled subject crawling toward the protective region 13 along an annular radial direction or a direction intersecting the annular radial direction, the to-be-repelled subject simultaneously contacts positive and negative electrodes, thereby generating a repelling current. Under electrical stimulation from the repelling current, the to-be-repelled subject changes a crawling direction until the subject crawls to a region outside the repelling device 40, thereby effectively preventing subjects to be repelled approaching from different directions from entering the protective region 13.

In a fifth optional embodiment of the repelling device 40, this embodiment is similar to the fourth optional embodiment. A difference is that, in this embodiment, referring to FIG. 14, the plurality of first electrodes 41 comprise a plurality of third positive electrodes 413, and the plurality of second electrodes 42 comprise a plurality of fourth positive electrodes 423. The third positive electrodes 413 and the fourth positive electrodes 423 are electrically isolated from each other at intersections thereof.

In one optional embodiment, voltages loaded on the plurality of third positive electrodes 413 are the same. Voltages loaded on the plurality of fourth positive electrodes 423 are the same, and the voltages loaded on the third positive electrodes 413 are different from those loaded on the fourth positive electrodes 423. In this way, a grid-shaped electrode protective net including intersecting electrodes with a potential difference is formed.

In another optional embodiment, voltages loaded on the plurality of third positive electrodes 413 are different.

For example, in a direction gradually approaching the to-be-protected component 12, potential differences between adjacent two third positive electrodes 413 gradually increase. As a further example, the third positive electrodes 413 are annular. The plurality of third positive electrodes 413 are successively disposed around the peripheral side of the to-be-protected component 12.

In this embodiment, in a direction gradually approaching the to-be-protected component 12, an intensity of the repelling current corresponding to electrical-stimulation protective barriers formed between adjacent two third positive electrodes 413 gradually increases.

On one hand, as the to-be-repelled subject climbs closer to the protective region 13, the required electrical stimulation gradually increases, thereby facilitating driving some relatively large subjects to be repelled to crawl in a direction away from the protective region 13. On the other hand, some relatively large subjects to be repelled may simultaneously contact the plurality of third positive electrodes 413, namely simultaneously receive repelling currents produced by multiple electrical-stimulation protective barriers, thereby further stimulating the relatively large subjects to be repelled to crawl in a direction away from the protective region 13.

Because an intensity of the repelling current in this embodiment is relatively small, for example, the repelling current is about several hundred microamperes, potential differences between adjacent two third positive electrodes 413 are correspondingly small. By respectively loading two slightly different voltages onto two third positive electrodes 413, a relatively small potential difference is formed, thereby making it easier to generate a slight repelling current.

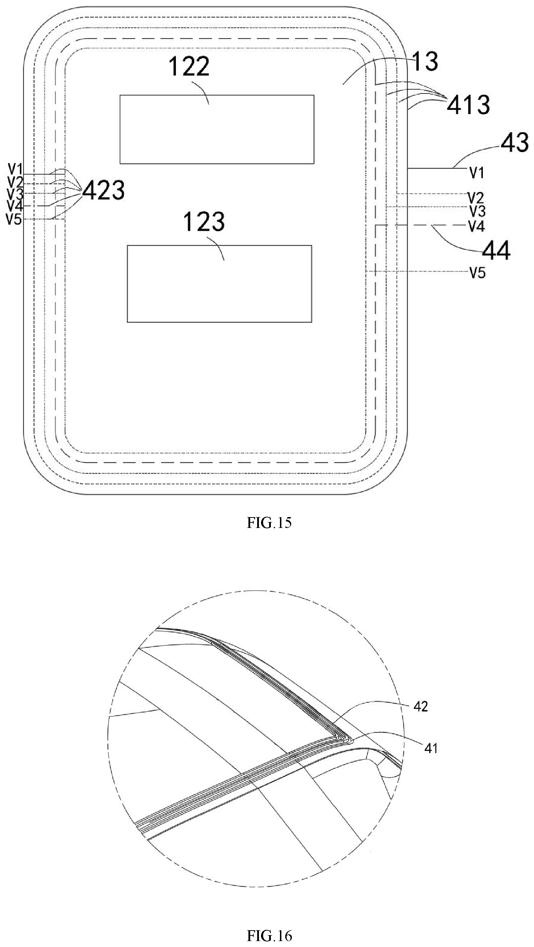

In a further optional arrangement, referring to FIG. 15, voltages loaded on the plurality of fourth positive electrodes 423 are different.

For example, an extension direction of the plurality of fourth positive electrodes 423 is a radial direction of the annular third positive electrodes 413. Each fourth positive electrode 423 intersects the plurality of third positive electrodes 413 and is electrically connected to the plurality of third positive electrodes 413 at intersections thereof.

In this embodiment, for one group of fourth positive electrodes 423, an intensity of the repelling current corresponding to electrical-stimulation protective barriers formed between adjacent two fourth positive electrodes 423 gradually increases. Multiple groups of fourth positive electrodes 423 are sequentially arranged. For example, in a circumferential direction around the to-be-protected component 12, a voltage distribution of multiple groups of fourth positive electrodes 423 is V1, V2, V3, V4, V5, V1, V2, V3, V4, V5, V1, V2, V3, V4, V5, V1, V2, V3, V4, V5, ... V1, V2, V3, V4, V5, wherein V1, V2, V3, V4, and V5 form one group of fourth positive electrodes 423.

On one hand, as the to-be-repelled subject climbs closer to the protective region 13, the required electrical stimulation gradually increases, thereby facilitating driving some relatively large subjects to be repelled to crawl in a direction away from the protective region 13. On the other hand, some relatively large subjects to be repelled may simultaneously contact the plurality of fourth positive electrodes 423, namely simultaneously receive repelling currents produced by multiple electrical-stimulation protective barriers, thereby further stimulating the relatively large subjects to be repelled to crawl in a direction away from the protective region 13.

Because an intensity of the repelling current in this embodiment is relatively small, for example, the repelling current is about several hundred microamperes, potential differences between adjacent two fourth positive electrodes 423 are correspondingly small. By respectively loading two slightly different voltages onto two fourth positive electrodes 423, a relatively small potential difference is formed, thereby making it easier to generate a slight repelling current.

The grid-shaped protective net formed by the repelling device 40 described above may form electrode lines including potential differences in all directions, thereby effectively preventing subjects to be repelled approaching from different directions from entering the protective region 13.

In a further optional arrangement, each fourth positive electrode 423 has the same voltage as one third positive electrode 413 and is electrically connected to the corresponding third positive electrode 413 at an intersection thereof. For example, voltages of five third positive electrodes 413 are V1, V2, V3, V4, and V5 in sequence, and voltages of one group of fourth positive electrodes 423 are V1, V2, V3, V4, and V5 in sequence. In this way, the plurality of fourth positive electrodes 423 including the same voltage may be electrically connected through one third positive electrode 413 and form electrodes including the same voltage, and may be electrically connected to one positive output port of the power source through one electrical connection trace.

Referring to FIG.16, a surface of the first electrodes 41 are flush with a surface of the device body or protrudes from the surface of the device body, so as to facilitate sufficient contact between the first electrodes 41 and the to-be-repelled subject.

A surface of the second electrodes 42 are flush with the surface of the device body or protrudes from the surface of the device body, so as to facilitate sufficient contact between the second electrodes 42 and the to-be-repelled subject.

In a further optional arrangement, the second electrodes 42 protrudes relative to the first electrodes 41. Because a snail is a soft-bodied organism, the snail simultaneously contacts the first electrodes 41 and the second electrodes 42 while passing the first electrodes 41 and the second electrodes 42, thereby causing the first electrodes 41 and the second electrodes 42 to form a conductive circuit and generate a repelling current. Because the first electrodes 41 and the second electrodes 42 are arranged with a height offset, a user finger does not simultaneously contact the first electrodes 41 and the second electrodes 42, thereby preventing inadvertent touch of the first electrodes 41 and the second electrodes 42 by the user.

Further, the number of the first electrodes 41 are a plurality, and the number of the second electrodes 42 are a plurality. A distance between adjacent two second electrodes 42 is less than or equal to a first preset distance, wherein the first preset distance is less than a width of a pad of a little finger of a user, so that a pad of the user finger does not simultaneously contact the first electrodes 41 and the second electrodes 42. For example, the first preset distance is 4 mm.

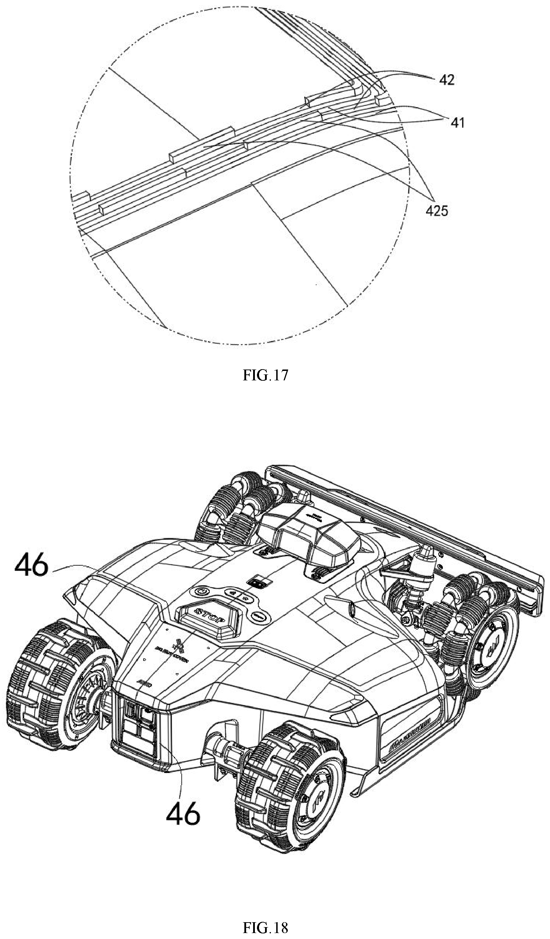

Optionally, referring to FIG.17, the second electrodes 42 are provided with a plurality of spaced conductive portions 425. The plurality of conductive portions 425 are electrically connected to the second electrodes 42 respectively and protrude relative to the first electrodes 41.

Because a snail is a soft-bodied organism, the snail simultaneously contacts the first electrodes 41 and the second electrodes 42 while passing the first electrodes 41 and the second electrodes 42, thereby causing the first electrodes 41 and the second electrodes 42 to form a conductive circuit and generate a repelling current. Because the first electrodes 41 and the second electrodes 42 are arranged with a height offset, a user finger does not simultaneously contact the first electrodes 41 and the second electrodes 42, thereby preventing inadvertent touch of the first electrodes 41 and the second electrodes 42 by the user.

A gap exists between adjacent two conductive portions 425. In response to the second electrodes 42 being annular and the number of the second electrodes 42 being a plurality, the plurality of conductive portions 425 protruding from the second electrodes 42 may not only effectively prevent a user from inadvertently simultaneously touching the first electrodes 41 and the second electrodes 42, but also facilitate water between two second electrodes 42 flowing out through the gaps, thereby avoiding accumulated water being deposited between adjacent two second electrodes 42 and causing problems such as a short circuit between the first electrodes 41 and the second electrodes 42. Here, a width of the gap between adjacent two conductive portions 425 is less than a width of a pad of a little finger, so as to avoid a finger simultaneously contacting the first electrodes 41 and the second electrodes 42, or the conductive portions 425.

In a further optional arrangement, conductive portions 425 of adjacent two second electrodes 42 are staggered from each other. For example, a conductive portion 421 of an inner second electrode 42 faces a gap of an outer second electrode 42, and a conductive portion 421 of the outer second electrode 42 faces a gap of the inner second electrode 42. In this way, not only may a user be effectively prevented from inadvertently simultaneously touching the first electrodes 41 and the second electrodes 42, but water between the two second electrodes 42 may also flow out through gaps on two sides, further avoiding accumulated water being deposited between adjacent two second electrodes 42 and causing problems such as a short circuit between the first electrodes 41 and the second electrodes 42.

In a sixth optional embodiment of the repelling device 40, referring to FIG.18, the repelling device 40 comprises a galvanic cell electrode 46. In response to the to-be-repelled subject contacting the galvanic cell electrode 46, a repelling current is generated through a galvanic effect so as to apply electrical stimulation to the to-be-repelled subject.

The galvanic cell electrode 46 is a metal layer including electrochemical activity. The metal layer may undergo an electrochemical reaction with mucus secreted by a snail so as to form a galvanic cell reaction. During the galvanic cell reaction, a current is generated, and the current may be conducted to the body of the snail so as to apply slight electrical stimulation to the snail, thereby causing the snail to feel discomfort and stop moving or change a moving direction.

A material of the galvanic cell electrode 46 comprises, but is not limited to, an active metal such as copper, zinc, magnesium, or aluminum.

For example, the galvanic cell electrode 46 is a copper layer, a copper sheet, or a copper foil. The galvanic cell electrode 46 is disposed around the to-be-protected component 12. Optionally, the galvanic cell electrode 46 is in a closed annular shape or in a shape of multiple arc segments. Generally, a gap between adjacent arc segments is less than or equal to 5 mm, so as to prevent a snail from climbing into the protective region 13 through the gap between adjacent arc segments. Of course, the galvanic cell electrode 46 may further have a dot-matrix shape. A gap between dots in the dot-matrix shape is less than or equal to 5 mm, so as to prevent a snail from climbing into the protective region 13 through the gap between the dots.

It should be noted that mucus secreted by a snail contains moisture and a certain concentration of electrolytes, such as salts, calcium ions, and other minerals, and is electrically conductive. In response to a snail crawling onto a copper surface, the mucus serves as a conductive medium, causing the copper and the environment to form a simple electrochemical cell.

In response to mucus of the snail contacting the copper surface, metal atoms in the copper release electrons and are oxidized into copper ions (Cu²⁺). This process may react with mucus in the snail body to form a weak current. Specifically, an anode reaction formula of the galvanic cell, in which copper is oxidized, is as follows:

Cu → Cu²⁺ + 2e⁻

A cathode reaction formula of the galvanic cell is as follows:

O₂ + 4H⁺ + 4e⁻ → 2H₂O

These reactions form a closed circuit with assistance of the mucus, thereby generating a slight current. The current stimulates the body of the snail and may interfere with a nervous system or a metabolic process of the snail. In addition, generated copper ions (Cu²⁺) further cause the snail to avoid the copper surface.

The repelling device 40 provided in this embodiment does not need a power source and is a passive repelling device 40, thereby saving energy consumption. In addition, electrical control is not needed, and the repelling device does not create a risk to a user.

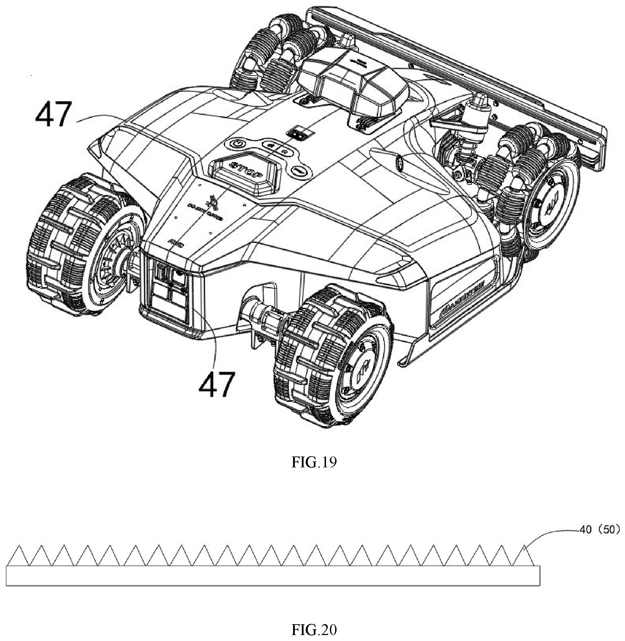

In a seventh optional embodiment of the repelling device 40, referring to FIG.19, the repelling device 40 comprises a conductive layer 47. Two ends of the conductive layer 47 are electrically connected to a positive terminal and a negative terminal of a power source, respectively, and are configured to apply electrical stimulation to the to-be-repelled subject in response to the to-be-repelled subject contacting the conductive layer 47.

Optionally, the conductive layer 47 is electrically connected into a conductive circuit, such that the conductive layer 47 carries a weak repelling current. The conductive layer 47 roughly surrounds the peripheral side of the to-be-protected component in an annular shape.

Specifically, the power source, a load, and the conductive layer 47 form a conductive circuit. The conductive layer 47 is disposed on a surface of the device body 10 and has a shape close to an annulus around the peripheral side of the to-be-protected component 12. A resistance value of the load is relatively large, thereby forming a relatively small repelling current in the conductive circuit, such that the to-be-repelled subject stops moving or changes a moving direction in response to contacting the conductive layer 47, thereby preventing the to-be-repelled subject from entering the protective region 13 and further preventing the to-be-protected component 12 from being blocked by the to-be-repelled subject or affected by mucus secreted by the to-be-repelled subject, so that the self-propelled operating apparatus 100 has a favorable repelling function and self-protection function, and reliability of the self-propelled operating apparatus 100 is improved.

Specific examples of the power source of the repelling device 40 are described below in the following embodiments.

In a first embodiment, the repelling device 40 further comprises a first power source. A positive terminal of the first power source is electrically connected to the first electrodes 41, and a negative terminal of the first power source is electrically connected to the second electrodes 42, such that the first electrodes 41 and the second electrodes 42 conduct through the to-be-repelled subject to generate a repelling current.

In a further optional arrangement, the first electrodes 41 and the second electrodes 42 are spaced apart or electrically insulated, thereby forming multiple annular electrodes, spiral electrodes, or grid electrodes.

In this embodiment, the repelling device 40 is independently provided with the first power source and does not need to share a power source of the self-propelled operating apparatus 100, thereby avoiding a need to convert the power source of the self-propelled operating apparatus 100 into a corresponding slight voltage to form a slight repelling current.

In a further optional arrangement, the first power source comprises, but is not limited to, a solar cell. On one hand, the solar cell may be charged by using solar energy without using a power source of the self-propelled operating apparatus 100. On the other hand, because the generated repelling current is very small, a required battery capacity is also very small, and solar charging is sufficient to supply the generated repelling current.

The foregoing positive terminal of the power source and negative terminal of the power source may be the positive terminal and the negative terminal of the first power source in this embodiment.

In a second embodiment, the self-propelled operating apparatus 100 comprises a second power source. A positive terminal of the first power source is electrically connected to the first electrodes 41, and a negative terminal of the first power source is electrically connected to the second electrodes 42, such that the first electrodes 41 and the second electrodes 42 conduct through the to-be-repelled subject to generate a repelling current. Optionally, the second power source may be a rechargeable battery of the self-propelled operating apparatus 100.

In this embodiment, the repelling device 40 reuses the rechargeable battery of the self-propelled operating apparatus 100, and no additional power source is needed, thereby saving cost and reducing space required for additionally providing a power source.

The foregoing positive terminal of the power source and negative terminal of the power source may be the positive terminal and the negative terminal of the second power source in this embodiment.

In an eighth optional embodiment of the repelling device 40, referring to FIG.20, the repelling device 40 comprises a spike structure 50. The spike structure 50 protrudes from a surface of the device body 10 and is disposed around the peripheral side of the to-be-protected component 12.

Optionally, a material of the spike structure 50 may be an insulating material. The spike structure 50 may be annular or dot-matrix-shaped around the peripheral side of the to-be-protected component 12. The spike structure 50 may repel snails by physical defense, thereby preventing the to-be-protected component 12 within the protective region 13 from being blocked by the snail or affected by mucus secreted by the snail.

Optionally, a material of the spike structure 50 may be a conductive material. In response to the spike structure 50 being made of a conductive material, the spike structure 50 may be the same structure as the galvanic cell electrode 46 in the sixth optional embodiment, namely, the galvanic cell electrode 46 is provided with a plurality of spike structures 50. This embodiment repels snails by using both galvanic-effect electrical stimulation and physical defense, thereby preventing the to-be-protected component 12 within the protective region 13 from being blocked by the snail or affected by mucus secreted by the snail.

This disclosure does not particularly limit a manner in which the repelling device 40 is disposed on the device body 10.

Optionally, the repelling device 40 may be coated or printed on the device body 10.

Optionally, the repelling device 40 may be attached to the device body 10 through an adhesive layer.

Optionally, the repelling device 40 may be detachably connected to the device body 10. More specifically, the repelling device 40 may be detachably connected to the device body 10 by magnetic attraction or the like.

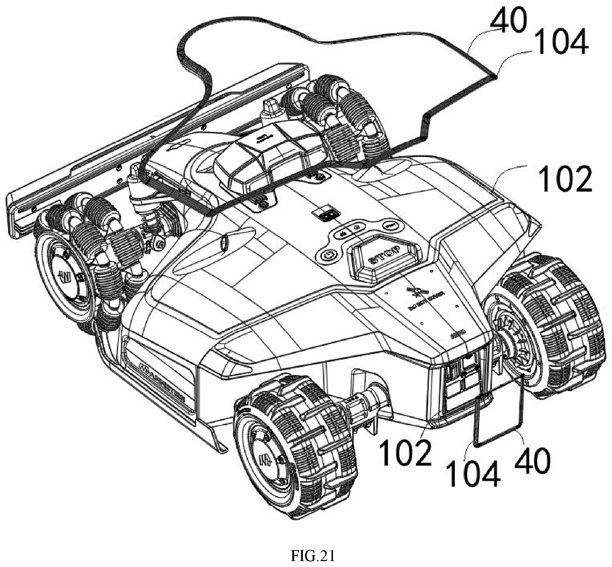

In a further optional arrangement, referring to FIG.21, a surface of the device body 10 is provided with a receiving recess 102. The receiving recess 102 is roughly annular. The repelling device 40 comprises a mounting portion 104. The mounting portion 104 is embedded in the receiving recess 102 and at least partially protrudes from the surface of the device body 10.

The mounting portion 104 comprises, but is not limited to, an insulating plate. The repelling device 40 is made of a conductive material, for example, the first electrodes 41 and the second electrodes 42, a conductive trace 48, or the galvanic cell electrode 46. The repelling device 40 is disposed on the insulating plate and is mounted in the receiving recess 102 through the insulating plate.

In this embodiment, by providing the receiving recess 102, the repelling device 40 may be installed conveniently.

In other embodiments, a surface of the device body 10 may also be provided without the receiving recess 102.

Optionally, the self-propelled operating apparatus 100 further comprises a controller.

In one optional embodiment, the to-be-protected component 12 comprises a humidity sensor. The humidity sensor is electrically connected to the controller. The controller is configured at least to control the repelling device 40 to generate a repelling current in response to the humidity sensor detecting humidity greater than or equal to a humidity threshold.

Specifically, because snails generally appear on rainy days, by providing the humidity sensor on the mower, humidity of an environment or a surface of the mower is detected by using the humidity sensor, and the repelling device 40 is controlled to generate a repelling current based on a humidity detection result, so as to repel snails.

Optionally, the humidity threshold is not particularly limited. The humidity threshold comprises, but is not limited to, 70%, 75%, or 80%.

In this embodiment, based on humidity detected by the humidity sensor, in response to the humidity being greater than the humidity threshold, the controller controls the power source to supply power to the repelling device 40, such that the repelling device 40 generates a repelling current and enters a repelling mode. Compared with a mode in which the repelling device 40 always remains in the repelling mode, power may be saved, and targeted snail repelling may be performed by utilizing biological characteristics of the snail, thereby improving working efficiency of the repelling device 40.

In another optional embodiment, the controller is configured to control the repelling device 40 to generate a repelling current in response to the self-propelled operating apparatus 100 being in a charging state or an operating state.

Generally, in response to the self-propelled operating apparatus 100 being in a charging state, the self-propelled operating apparatus 100 is in a stationary state. At this time, snails and other subjects to be repelled readily climb onto the self-propelled operating apparatus 100. Based on this, the controller controls the repelling device 40 to generate a repelling current and enter the repelling mode in response to the self-propelled operating apparatus 100 being in the charging state. Compared with a mode in which the repelling device 40 always remains in the repelling mode, power may be saved, and working efficiency of the repelling device 40 may be improved.

Generally, in response to the self-propelled operating apparatus 100 being in an operating state, the sensing module 121 is in a working state. In response to snails and other subjects to be repelled climbing onto the sensing module 121, detection accuracy of the sensing module 121 is affected. Therefore, the controller controls the repelling device 40 to generate a repelling current and enter the repelling mode in response to the self-propelled operating apparatus 100 being in the operating state. Compared with a mode in which the repelling device 40 always remains in the repelling mode, power may be saved, working efficiency of the repelling device 40 may be improved, and detection accuracy of the sensing module 121 may also be ensured.

This disclosure provides a self-propelled operating apparatus 100, taking a mower as an example. The self-propelled operating apparatus 100 is provided with a repelling device 40 on a surface thereof, so as to form a snail-repelling region, namely the protective region 13, on the surface of the self-propelled operating apparatus 100. For example, an electrically stimulated repelling device 40 is arranged around a vision sensor, a lidar, a charging interface, and the like of the self-propelled operating apparatus 100. In response to a snail crawling into the repelling region and contacting the repelling device 40, a microcurrent generated by the repelling device 40 is conducted to the body of the snail, such that the snail receives a slight electric shock and feels discomfort, thereby changing its crawling direction and moving away from the region where the repelling device 40 is disposed, so as to achieve a repelling purpose.

Further, a position of the repelling device 40 may be, for example, on a surface of a housing of the self-propelled operating apparatus 100 and around outer peripheries of a vision sensor, a lidar, a charging interface, a charging electrode plate, and the like. An installation mode of the repelling device 40 may be, for example, embedding in an outer shell surface of the self-propelled operating apparatus 100.

Further, the repelling device 40 may repel snails by electrical shock, or may repel snails by physical defense such as a barbed-net structure or spikes.

Three current generation modes for electrically shocking and repelling snails include, but are not limited to, the following. In a first current generation mode, the repelling device 40 comprises a positive electrode and a negative electrode, and in response to a snail crawling into contact with the positive electrode and the negative electrode, the snail electrically connects the positive electrode and the negative electrode so as to generate a current. In a second current generation mode, the repelling device 40 comprises the conductive layer 47, namely the above-mentioned conductive trace 48, the conductive layer 47 itself is energized, and in response to a snail crawling onto a surface of the conductive layer 47, the snail and the conductive layer 47 form a parallel circuit, thereby generating a current. In a third current generation mode, the repelling device 40 comprises a copper layer or a copper sheet. In response to a snail contacting the copper sheet, the snail and the copper sheet form a galvanic effect through mucus generated by the snail, thereby generating a current. In addition, the copper sheet also generates copper ions capable of stimulating the snail to avoid the copper sheet.

Further, electrode structure forms of the repelling device 40 include, but are not limited to, the following embodiments. A first electrode structure is an annular strip electrode, comprising a first annular strip electrode, such as the first electrode mentioned above, and a second annular strip electrode, such as the second electrode mentioned above, the first annular strip electrode and the second annular strip electrode being respectively connected to a positive terminal and a negative terminal of a power source. A second electrode structure is a grid electrode. Intersections of the grid electrode are insulated, and the grid electrode may increase a probability that a snail contacts the electrodes.

Further, the first annular strip electrode, such as the first electrode mentioned above, and the second annular strip electrode, such as the second electrode mentioned above, are arranged with a height offset, thereby preventing inadvertent touch of the positive electrode and the negative electrode by a user.

Further, the repelling device 40 further comprises a plurality of annular strip positive electrodes arranged at intervals, such as the above-mentioned third positive electrodes and fourth positive electrodes, and voltages of the annular strip positive electrodes are different, so as to generate currents of different intensities between two positive electrode lines. For example, the repelling device 40 comprises a first annular strip positive electrode, a second annular strip positive electrode, and a third annular strip positive electrode. The first annular strip positive electrode is connected to a 1 V power source, the second annular strip positive electrode is connected to a 3 V power source, and the third annular strip positive electrode is connected to a 7 V power source. In response to a snail electrically connecting the first annular strip positive electrode and the second annular strip positive electrode, a potential difference therebetween is 2 V. In response to the snail continuing to crawl, the snail electrically connects the second annular strip positive electrode and the third annular strip positive electrode, and a potential difference therebetween is 4 V. That is, the potential difference progressively increases, such that current stimulation received by the snail gradually increases. Alternatively, in response to the snail being relatively large, the snail may directly electrically connect the first annular strip positive electrode and the third annular strip positive electrode while crawling onto the machine surface, thereby generating a larger repelling current so as to repel the larger snail.

Further, a power source of the repelling device 40 may be independently provided. For example, the power source of the repelling device 40 is a solar cell and is charged by using solar energy. Because a generated repelling current is very small, a required battery capacity of the solar cell is also very small, and solar charging is sufficient to supply the power source.

Further, because snails generally appear on rainy days, a humidity sensor is arranged on the self-propelled operating apparatus 100, humidity of an environment or a surface of the self-propelled operating apparatus 100 is detected by using the humidity sensor, and activation of the electrically shocking repelling device 40 is controlled based on a humidity detection result.

Further, conductive protrusions, such as the above-mentioned conductive portions, are respectively arranged on the first annular strip electrode, such as the first electrode mentioned above, and the second annular strip electrode, such as the second electrode mentioned above. The first annular strip electrode and the second annular strip electrode are embedded in an outer housing of the self-propelled operating apparatus 100. The conductive protrusions are arranged at intervals and are arranged with a height offset, thereby forming dot-matrix electrodes, which may prevent accumulated water between the first annular strip electrode and the second annular strip electrode.

Although embodiments of this disclosure have been illustrated and described above, it should be understood that the above embodiments are exemplary and should not be construed as limiting this disclosure. A person of ordinary skill in the art may make variations, modifications, substitutions, and changes to the above embodiments within the scope of this disclosure, and such improvements and refinements shall also be regarded as falling within the protection scope of this disclosure.

## Claims

1. A self-propelled operating apparatus, comprising:
a device body , wherein a surface of the device body is provided with at least one to-be-protected component;
a travel device disposed at a bottom portion of the device body and configured to propel the self-propelled operating apparatus;
an operating device disposed on the device body and configured to perform a predetermined task; and
a repelling device disposed to surround at least a portion of a periphery of the at least one to-be-protected component to form a protective region, wherein the repelling device is configured such that a to-be-repelled subject stops moving or changes direction upon contacting the repelling device.

2. The self-propelled operating apparatus according to claim 1, wherein the at least one to-be-protected component comprises a sensor module, and the repelling device surrounds at least a portion of a periphery of the sensor module.

3. The self-propelled operating apparatus according to claim 1 or 2, wherein the at least one to-be-protected component comprises a charging device, and the repelling device surrounds at least a portion of a periphery of the charging device.

4. The self-propelled operating apparatus according to any of claims 1 to 3, wherein the repelling device is configured to generate a repelling current to repel the to-be-repelled subject.

5. The self-propelled operating apparatus according to claim 4, wherein the repelling device comprises a first electrode and a second electrode, such that when the to-be-repelled subject simultaneously contacts the first electrode and the second electrode, a conductive path is formed between the first electrode and the second electrode to generate a current for repelling the to-be-repelled subject.

6. The self-propelled operating apparatus according to claim 5, wherein the first electrode is electrically connected to a positive terminal of a power source and the second electrode is electrically connected to a negative terminal of the power source.

7. The self-propelled operating apparatus according to claim 5 or 6, wherein
the first electrode is an annular electrode, and the second electrode is an annular electrode;
or
the first electrode is a planar spiral electrode and the second electrode is a planar spiral electrode.

8. The self-propelled operating apparatus according to any of claims 5 to 7, wherein the second electrode protrudes beyond the first electrode.

9. The self-propelled operating apparatus according to any of claims 5 to 8, wherein the second electrode comprises a plurality of spaced conductive portions, each of which is electrically connected to the second electrode and protrudes beyond the first electrode.

10. The self-propelled operating apparatus according to any of claims 5 to 9, wherein the repelling device comprises a conductive layer, and two ends of the conductive layer are electrically connected to a positive terminal and a negative terminal of a power source, respectively, and configured to apply electrical stimulation to the to-be-repelled subject when the to-be-repelled subject contacts the conductive layer.

11. The self-propelled operating apparatus according to any of claims 5 to 9, wherein the repelling device comprises a galvanic cell electrode, such that when the to-be-repelled subject contacts the galvanic cell electrode, a current is generated by a galvanic effect to apply electrical stimulation to the to-be-repelled subject.

12. The self-propelled operating apparatus according to claim 11, wherein the galvanic cell electrode comprises a copper layer.

13. The self-propelled operating apparatus according to any of claims 1 to 12, wherein the repelling device comprises a spike structure, the spike structure protruding from the surface of the device body and surrounding the to-be-protected component.

14. The self-propelled operating apparatus according to any of claims 1 to 13, wherein the repelling device is detachably connected to the device body.

15. The self-propelled operating apparatus according to any of claims 4 to 14, wherein
the self-propelled operating apparatus further comprises a controller, the to-be-protected component comprises a humidity sensor, and the humidity sensor is electrically connected to the controller;
the controller is configured at least to, in response to the humidity sensor detecting humidity greater than or equal to a humidity threshold, control the repelling device to be electrically connected to a power source; or
the controller is configured to control the repelling device to be electrically connected to the power source in response to the self-propelled operating apparatus being in a charging state or an operating state.
